Europäisches Patentamt

European Patent Office

Office européen des brevets

(19)

(11) **EP 1 570 287 B1**

(12) **FASCICULE DE BREVET EUROPEEN**

(45) Date de publication et mention
de la délivrance du brevet:
**03.05.2006 Bulletin 2006/18**

(21) Numéro de dépôt: **03813176.9**

(22) Date de dépôt: **12.12.2003**

(51) Int Cl.:
*G01S 1/04* (2006.01)     *G01S 1/68* (2006.01)

(86) Numéro de dépôt international:
**PCT/FR2003/003695**

(87) Numéro de publication internationale:
**WO 2004/055541 (01.07.2004 Gazette 2004/27)**

(54) **PROCEDE ET DISPOSITIF DE GENERATION D'UN SIGNAL DE NAVIGATION A ENVELOPPE CONSTANTE A QUATRE CODES INDEPENDANTS**

VERFAHREN UND VORRICHTUNG ZUR ERZEUGUNG EINES KONSTANTEN HÜLLKURVENNAVIGATIONSSIGNALS MIT VIER UNABHÄNGIGEN CODES

METHOD AND DEVICE FOR GENERATING A CONSTANT ENVELOPE NAVIGATION SIGNAL WITH FOUR INDEPENDENT CODES

(84) Etats contractants désignés:
**AT BE BG CH CY CZ DE DK EE ES FI FR GB GR HU IE IT LI LU MC NL PT RO SE SI SK TR**

(30) Priorité: **13.12.2002 FR 0215848**

(43) Date de publication de la demande:
**07.09.2005 Bulletin 2005/36**

(73) Titulaire: **Centre National d'Etudes Spatiales ( C.N.E.S.)**
**75039 Paris Cedex 01 (FR)**

(72) Inventeur: **LESTARQUIT, Laurent**
**F-31500 Toulouse (FR)**

(74) Mandataire: **Cabinet BARRE LAFORGUE & associés**
**95, rue des Amidonniers**
**31000 Toulouse (FR)**

(56) Documents cités:
EP-A- 0 859 472     US-A- 4 308 617
US-A- 5 022 049     US-A- 6 075 810

• L. RIES, L. LESTARQUIT, E. ARMENGOU-MIRET, F. LEGRAND, W. VIGNEAU, C. BOURGA, P. ERHARD, JL. ISSLER: "A software simulation tool for GNSS" BOC signals analysis" PROCEEDINGS OF THE INSTITUTE OF NAVIGATION (ION), GPS, 24 - 27 septembre 2002, pages 2228-2239, XP002273298 Portland

• G.W. HEIN, J. GODET, JL. ISSLER, JC. MARTIN, P. ERHARD, R. LUCAS-RODRIGUEZ, T. PRATT: "Status of Galileo Frequency and Signal Design" PROCEEDINGS OF THE INSTITUTE OF NAVIGATION (ION), GPS, 24 - 27 septembre 2002, pages 266-277, XP002273300 Portland

**Description**

L'invention concerne un procédé et un dispositif de génération, à bord d'un satellite spatial ou à partir d'une balise terrestre (pseudolite), d'un signal de navigation modulé pour le positionnement d'un récepteur par liaison descendante comprenant quatre codes de navigation pseudo-aléatoires de fréquence supérieure à 0,5 MHz modulés sur une même porteuse de fréquence fp supérieure à 500 MHz, typiquement comprise entre 1000 MHz et 1700 MHz.

La génération de signaux de navigation modulés tels que ceux rencontrés pour les constellations GPS ou Galiléo ou d'autres systèmes tels que GLONASS, KOMPASS, BEIDOU ou les pseudolites (ou pseudo-satellites) sont spécifiques, et notamment complètement distincts de ceux rencontrés pour les signaux de télécommunication véhiculant des informations et données.

En effet, un signal de navigation pour le positionnement d'un récepteur par liaison descendante véhicule essentiellement des codes pseudo-aléatoires formés de séquences numériques cadencées à haute fréquence, se répétant sur une très longue période, dont la fonction principale est de fournir une datation de l'émission et non de transmettre des données numériques. L'un au moins des codes pseudo-aléatoires peut aussi, accessoirement, véhiculer des données (données numériques ou messages, de navigation tels que position du(des) satellite(s), dérive d'horloge bord, corrections ionosphériques, almanachs ou éphémérides, ...) mais selon un rythme beaucoup plus faible (typiquement 25 à 500 bits/s, alors que la fréquence du code pseudo-aléatoire est supérieure à 0,5 MHz).

Chaque code pseudo-aléatoire est comparé par le récepteur à une réplique, de façon à déterminer la "pseudo-distance" correspondant à la somme du temps de trajet et du biais d'horloge entre le satellite émetteur et le récepteur.

La publication "Status of Galileo Frequency and Signal Design" Guenter W. HEIN, Jeremie GODET, Jean-Luc ISSLER, Jean-Christophe MARTIN, Philippe ERHARD, Rafaël LUCAS-RODRIGUEZ, Tony PRATT, 25/09/2002, http// europa.eu.int/comm/dgs/energy_transport/galileo/ documents/technical_en.htm décrit les différents schémas de modulation connus et pouvant être envisagés pour réaliser un signal de navigation modulé.

En particulier, ce document prévoit, pour la modulation dans la bande E5 qui doit transmettre quatre codes de navigation cadencés à 10 MHz, soit deux signaux QPSK sur deux bandes E5a, E5b distinctes (deux porteuses distinctes multiplexées), soit un seul signal large bande généré selon une modulation du type dit BOC ("binary offset carrier"), utilisant une sous-porteuse carrée. L'intérêt d'une modulation de type BOC est en effet de permettre la transmission de plusieurs codes sur une seule porteuse, ce qui entraîne des biais identiques. La modulation BOC permet aussi de ne pas dégrader le rapport signal/bruit. En effet, elle permet de se passer de multiplexeurs et donc de limiter les pertes dans la charge utile et de transmettre les lobes secondaires du signal s'ils existent. Egalement, du fait de l'utilisation d'une chaîne d'amplification unique, les variations des temps de propagation des différents codes sont corrélées au bénéfice d'une meilleure performance.

Le document sus-cité rappelle aussi l'importance de générer le signal modulé avec une enveloppe constante, de façon à pouvoir optimiser le fonctionnement de l'amplificateur de puissance, et d'éviter d'avoir à prévoir un amplificateur linéaire et/ou présentant un certain recul (donc un plus faible rendement), plus volumineux et plus lourd. Il est à noter à cet égard que ce problème est particulièrement important dans la mesure où l'amplificateur de puissance représente la plus grande partie de la masse et du volume du circuit électronique embarqué pour l'émission du signal de navigation. Comme l'indique le document sus-cité, il a été envisagé d'utiliser une modulation BOC alternative (ou en bande de base) comprenant une sous-porteuse rectangulaire (dont l'intérêt est notamment qu'elle peut être générée sous forme numérique) complexe. Mais si l'on veut transmettre quatre codes avec une telle modulation, on obtient nécessairement un signal de navigation d'enveloppe non constante, et dont la valeur peut même être nulle. Il en va de même si l'on utilise une sous-porteuse sinusoïdale. C'est la raison pour laquelle ce document annonce l'emploi d'une variante permettant de générer les quatre codes avec une enveloppe constante par une modulation 8-PSK, mais ne décrit en rien le procédé ou le dispositif permettant d'obtenir un tel résultat surprenant.

L'invention vise donc à proposer un procédé et un dispositif pour la génération d'un tel signal de navigation modulé large bande pouvant véhiculer quatre codes de navigation pseudo-aléatoires sur une même porteuse tout en présentant une enveloppe constante.

Pour ce faire, l'invention concerne un procédé de génération -notamment à bord d'un système spatial- d'un signal de navigation modulé destiné à être utilisé pour le positionnement d'un récepteur par liaison descendante, comprenant une pluralité de codes de navigation pseudo-aléatoires de rythmes de bribes supérieurs à 0,5 MHz modulés sur une porteuse de fréquence fp supérieure à 500 MHz, caractérisé en ce qu'on module sur la porteuse quatre codes de navigation pseudo-aléatoires C1, C2, C1', C2', selon une modulation 8-PSK d'amplitude constante avec une fréquence de modulation fM telle que:

$$8fc \leq fM$$

où fc = Max(fci), fci désignant les rythmes de bribes fc1, fc1', fc2, fc2' des codes de navigation C1, C2, C1', C2', chaque valeur fci étant telle que fM = Ni.fci, Ni étant un nombre entier supérieur ou égal à 8, deux codes de navigation C1, C1' étant modulés en quadrature à la fréquence f1 = fp - fM/8 et deux autres codes de navigation C2, C2' étant modulés en quadrature à la fréquence f2 = fp + fM/8, le signal de navigation modulé présentant une enveloppe constante.

Le signal de navigation selon l'invention présente une séparation spectrale des codes qui sont répartis en deux lobes principaux autour de la fréquence porteuse.

Avantageusement et selon l'invention, on choisit fM ≤ 400 MHz. Plus particulièrement, dans le cas d'un procédé mis en oeuvre à bord d'un système spatial, on choisit fM ≤ 200 MHz.

On peut constater qu'une telle modulation correspond en fait à une modulation LOC ("linear offset carrier") à sous-porteuse sinusoïdale de fréquence fM/8 mais discrétisée pour n'adresser que les points correspondants à la constellation 8-PSK d'amplitude constante. On arrive ainsi, de façon surprenante, à transmettre sur une seule porteuse quatre codes de navigation pseudo-aléatoires distincts et indépendants combinés sur un unique signal de modulation en bande de base d'enveloppe constante à l'émission avec une occupation spectrale centrée sur f1 pour C1 et C1' et sur f2 pour C2 et C2' et avec un écart faible entre f1 et f2 (inférieur à 100 MHz) -notamment inférieur à 50 MHz à bord d'un système spatial-. Il est à noter en particulier qu'avec un écart de fréquences aussi faible, la solution qui consisterait à multiplexer des signaux modulés et amplifiés séparément pour chaque fréquence f1, f2 ne donnerait pas des résultats pratiques satisfaisants, notamment à bord d'un système spatial. En effet, cette solution nécessiterait un filtrage trop étroit de chacun des signaux modulés, d'où une perte de qualité, rédhibitoire en pratique, du signal de navigation.

Par ailleurs, la condition que 8fc ≤ fM permet d'assurer que la fréquence de la sous-porteuse soit supérieure au rythme de bribes des codes pseudo-aléatoires.

Avantageusement et selon l'invention, on utilise une modulation 8-PSK d'amplitude constante symétrique dans le plan de Fresnel. En variante, on utilise une modulation 8-PSK d'amplitude constante dissymétrique dans le plan Fresnel.

Avantageusement et selon l'invention, on utilise une modulation 8-PSK d'états de phases égaux à k.π/4, k étant un nombre entier compris entre 1 et 8. Ainsi, pour des codes pseudo-aléatoires prenant les valeurs 1 et -1, le signal de modulation en bande de base peut prendre les valeurs suivantes:

$$2.\exp\left[jk.\pi/4\right], k \in \{1,2,3,4,5,6,7,8\}$$

Avantageusement et selon l'invention, on module les quatre codes selon une table de vérité choisie dans le groupe des tables de vérité formé de :

TABLE 1

| C1(t) | -1 | -1 | -1 | -1 | -1 | -1 | -1 | -1 | 1 | 1 | 1 | 1 | 1 | 1 | 1 | 1 |
|---|---|---|---|---|---|---|---|---|---|---|---|---|---|---|---|---|
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | 1 | 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P5 | P4 | P4 | P3 | P6 | P7 | P5 | P2 | P6 | P1 | P3 | P2 | P7 | P8 | P8 | P1 |
| [TM, 2TM[ | P5 | P8 | P4 | P3 | P6 | P7 | P5 | P6 | P2 | P1 | P3 | P2 | P7 | P8 | P4 | P1 |
| [2TM, 3TM[ | P1 | P8 | P4 | P7 | P6 | P7 | P5 | P6 | P2 | P1 | P3 | P2 | P3 | P8 | P4 | P5 |
| [3TM, 4TM[ | P1 | P8 | P8 | P7 | P2 | P7 | P5 | P6 | P2 | P1 | P3 | P6 | P3 | P4 | P4 | P5 |
| [4TM, 5TM[ | P1 | P8 | P8 | P7 | P2 | P3 | P1 | P6 | P2 | P5 | P7 | P6 | P3 | P4 | P4 | P5 |
| [5TM, 6TM[ | P1 | P4 | P8 | P7 | P2 | P3 | P1 | P2 | P6 | P5 | P7 | P6 | P3 | P4 | P8 | P5 |

Suite de tableau

| | | | | | | | | | | | | | | | |
|---|---|---|---|---|---|---|---|---|---|---|---|---|---|---|---|
| [6TM, 7TM[ | P5 | P4 | P8 | P3 | P2 | P3 | P1 | P2 | P6 | P5 | P7 | P6 | P7 | P4 | P8 | P1 |
| [7TM, 8TM[ | P5 | P4 | P4 | P3 | P6 | P3 | P1 | P2 | P6 | P5 | P7 | P2 | P7 | P8 | P8 | P1 |

**TABLE 2**

| C1(t) | -1 | -1 | -1 | -1 | -1 | -1 | -1 | -1 | 1 | 1 | 1 | 1 | 1 | 1 | 1 | 1 |
|---|---|---|---|---|---|---|---|---|---|---|---|---|---|---|---|---|
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | 1 | 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P1 | P8 | P4 | P7 | P6 | P7 | P5 | P6 | P2 | P1 | P3 | P2 | P3 | P8 | P4 | P5 |
| [TM, 2TM[ | P1 | P8 | P8 | P7 | P2 | P7 | P5 | P6 | P2 | P1 | P3 | P6 | P3 | P4 | P4 | P5 |
| [2TM, 3TM[ | P1 | P8 | P8 | P7 | P2 | P3 | P1 | P6 | P2 | P5 | P7 | P6 | P3 | P4 | P4 | P5 |
| [3TM, 4TM[ | P1 | P4 | P8 | P7 | P2 | P3 | P1 | P2 | P6 | P5 | P7 | P6 | P3 | P4 | P8 | P5 |
| [4TM, 5TM[ | P5 | P4 | P8 | P3 | P2 | P3 | P1 | P2 | P6 | P5 | P7 | P6 | P7 | P4 | P8 | P1 |
| [5TM, 6TM[ | P5 | P4 | P4 | P3 | P6 | P3 | P1 | P2 | P6 | P5 | P7 | P2 | P7 | P8 | P8 | P1 |
| [6TM, 7TM[ | P5 | P4 | P4 | P3 | P6 | P7 | P5 | P2 | P6 | P1 | P3 | P2 | P7 | P8 | P8 | P1 |
| [7TM, 8TM[ | P5 | P8 | P4 | P3 | P6 | P7 | P5 | P6 | P2 | P1 | P3 | P2 | P7 | P8 | P4 | P1 |

où P1, P2, P3, P4, P5, P6, P7, P8 sont les différents plots et la constellation 8-PSK, et TM = 1/fM, et des autres tables de vérité issues de ces tables de vérité TABLE 1 et TABLE 2 par rotation de phase de n.$\pi$/4, n $\in$ {1,2,3,4,5,6,7} et/ou inversion de sens de parcours de la constellation. Les changements d'états d'une combinaison des quatre codes à une autre interviennent de façon pseudo-aléatoire selon une fréquence qui est un multiple de fM (fM y compris). Avantageusement et selon l'invention, fp est comprise entre 1000 MHz et 1700 MHz (bande L). Avantageusement et selon l'invention, fc est de l'ordre de 10 MHz. Avantageusement et selon l'invention, fM est de l'ordre de 120 MHz. Avantageusement et selon l'invention, dans au moins une paire de codes C1, C1' ; C2, C2' modulés en quadrature sur la même fréquence, l'un C1'; C2' incorpore des données numériques modulées selon une fréquence inférieure à fc/1000. Ainsi, chaque paire de codes peut incorporer des données numériques.

L'invention s'étend à un dispositif pour la mise en oeuvre d'un procédé selon l'invention. L'invention concerne ainsi un dispositif de génération -notamment à bord d'un système spatial-, d'un signal de navigation modulé destiné à être utilisé pour le positionnement d'un récepteur par liaison descendante, comprenant une pluralité de codes de navigation pseudo-aléatoires de rythmes de bribes supérieurs à 0,5 MHz modulés sur une porteuse de fréquence fp supérieure à 500 MHz, ce dispositif comprenant :

- un circuit générateur de codes de navigation pseudo-aléatoires,
- un circuit modulateur par déplacement de phase délivrant le signal de navigation modulé sur la porteuse,
- un circuit émetteur, comprenant au moins un étage d'amplification de puissance, apte à émettre un signal radiofréquence correspondant au signal de navigation modulé,

caractérisé en ce que le circuit modulateur est adapté pour moduler sur la porteuse quatre codes de navigation aléatoire C1, C2, C1', C2', selon une modulation 8-PSK d'amplitude constante avec une fréquence de modulation $f_M$ telle que :

$$8fc \leq fM$$

où fc = Max(fci), fci désignant les rythmes de bribes fc1, fc1', fc2, fc2' des codes de navigation C1, C2, C1', C2', chaque valeur fci étant telle que fM = Ni.fci, Ni étant un nombre entier supérieur ou égal à 8, deux codes de navigation C1, C1' étant modulés en quadrature à la fréquence f1 = fp - fM/8 et deux autres codes de navigation C2, C2' étant modulés en quadrature à la fréquence f2 = fp + fM/8, le signal de navigation modulé présentant une enveloppe constante.

Avantageusement et selon l'invention, le circuit modulateur est adapté pour réaliser une modulation 8-PSK avec une fréquence de modulation fM $\leq$ 400 Mhz. Dans le cas notamment d'un dispositif destiné à être embarqué à bord d'un satellite spatial, avantageusement et selon l'invention, le circuit modulateur est adapté pour réaliser une modulation 8-PSK avec une fréquence de modulation fM $\leq$ 200 MHz.

Avantageusement et selon l'invention, le circuit modulateur est adapté pour réaliser une modulation 8-PSK d'amplitude constante symétrique dans le plan de Fresnel.

En variante, le circuit modulateur est adapté pour réaliser une modulation 8-PSK d'amplitude constante dissymétrique dans le plan de Fresnel.

Avantageusement et selon l'invention, le circuit modulateur est adapté pour réaliser une modulation 8-PSK avec des états de phases égaux à k $\pi$/4, k étant un nombre entier compris entre 1 et 8. Avantageusement et selon l'invention, le circuit modulateur est adapté pour moduler les quatre codes selon une table de vérité telle que décrite ci-dessus. Avantageusement et selon l'invention, fp est comprise entre 1000 MHz et 1700 MHz. Avantageusement et selon l'invention, fc est de l'ordre de 10 MHz. Avantageusement et selon l'invention, fM est de l'ordre de 120 MHz. Avantageusement et selon l'invention, le dispositif est adapté pour que dans au moins une paire de codes C1, C1' ; C2, C2' modulés en quadrature sur la même fréquence, l'un C1', C2' incorpore des données numériques modulées selon une fréquence inférieure à fc/1000.

L'invention permet ainsi de façon très simple, de transmettre par un unique signal de navigation modulé, quatre codes pseudo-aléatoires indépendants, par une modulation 8-PSK assimilable à une modulation LOC à sous-porteuse sinusoïdale discrétisée pour ne sélectionner que les points d'amplitude constante.

L'invention concerne aussi un procédé et un dispositif caractérisés en combinaison par tout ou partie des caractéristiques mentionnées ci-dessus ou ci-après.

D'autres buts, caractéristiques et avantages de l'invention apparaissent à la lecture de la description suivante qui se réfère aux figures annexées, dans lesquelles :

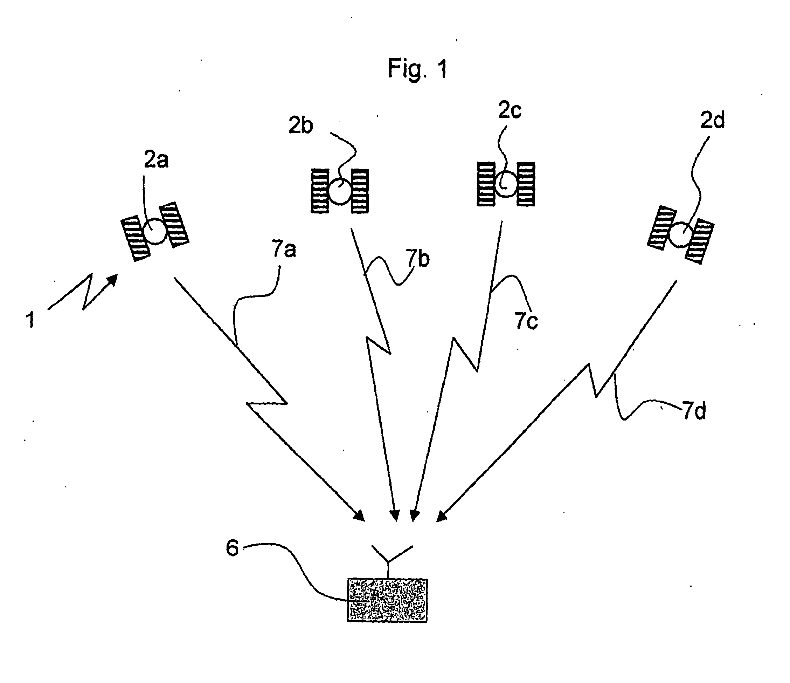

- la figure 1 est un schéma d'une constellation de satellites de navigation telle que GPS ou Galiléo,
- la figure 2 est un schéma de principe d'un dispositif selon l'invention,
- la figure 3 est un schéma de principe d'un circuit d'un récepteur de signal de navigation modulé pour le positionnement par liaison descendante,
- la figure 4 est un schéma plus détaillé d'une partie du dispositif de la figure 2 selon l'invention,
- les figures 5 et 6 sont des schémas représentant deux exemples d'architecture possibles de récepteurs compatibles avec un procédé et un dispositif selon l'invention,
- la figure 7 est un diagramme représentant un exemple des chronogrammes des codes de navigation et des voies I, Q d'un signal de navigation dans un procédé selon l'invention,
- la figure 8 est un diagramme dans le plan de Fresnel représentant une constellation de modulation 8-PSK pouvant être utilisée dans un procédé selon l'invention,
- la figure 9 est un exemple de diagramme représentant un spectre de signal de navigation d'un procédé selon l'invention,
- la figure 10 est un diagramme représentant le spectre du signal de la figure 9 filtré par un filtre de fréquence centrale fp et laissant passer les deux lobes principaux aux fréquences f1 et f2, ainsi que des lobes secondaires,
- la figure 11 est un diagramme représentant le spectre du signal de la figure 9 filtré par un filtre de fréquence centrale f1 et ne laissant passer que le lobe principal en f1, ainsi que des portions de lobes secondaires,
- la figure 12 est un diagramme représentant un exemple de fonction de corrélation utilisé dans un récepteur et correspondant au signal de navigation de la figure 11.

Le dispositif selon l'invention est destiné à être embarqué à bord d'un système spatial tel qu'un satellite 2a, 2b, 2c, 2d appartenant à une constellation 1 de satellites adaptée pour permettre la radionavigation et/ou le radiopositionnement de récepteurs 6 situés sur Terre ou sur un satellite terrestre -notamment des récepteurs terrestres ou embarqués sur satellites ou aéronefs-. L'invention est en particulier destinée à équiper les satellites de la constellation Galiléo pour l'émission de codes de navigation dans la bande E5.

Un dispositif selon l'invention peut aussi, en variante ou en combinaison, être utilisé dans des pseudolites (ou pseudo-satellites) qui sont des balises, généralement au sol, générant un signal de navigation proche d'un signal de navigation diffusé par un satellite.

Chaque satellite 2a, 2b, 2c, 2d comprend donc un dispositif selon l'invention de génération d'un signal de navigation modulé 7a, 7b, 7c, 7d comprenant une pluralité de codes de navigation pseudo-aléatoires destinés à être utilisés pour le positionnement du récepteur 6 par liaison descendante.

Ce dispositif de génération comprend une antenne de réception 8 associée à un circuit 9 récepteur de données, de sorte que le dispositif de génération peut recevoir des données ou messages de navigation -notamment en provenance en général du sol pour la gestion de la constellation 1 par le segment de contrôle sol- pouvant en tout ou partie être incorporés dans le signal de navigation modulé.

Le dispositif de génération comprend également un circuit d'horloge 10 fournissant une fréquence de référence f0 à un circuit 11 de génération des codes de navigation et à un circuit 12 de génération du signal de porteuse. Le circuit 11 de génération des codes de navigation reçoit éventuellement les données en provenance du récepteur de données 9. Les codes de navigation issus du circuit 11 sont modulés par un circuit modulateur 13 sur le signal de porteuse issu du circuit 12. Le signal modulé ainsi obtenu est délivré à une antenne d'émission 14 par l'intermédiaire d'un circuit émetteur 15 d'amplification et de filtrage, de sorte que l'antenne d'émission 14 émet le signal de navigation 7 modulé véhiculant les différents codes de navigation pseudo-aléatoires.

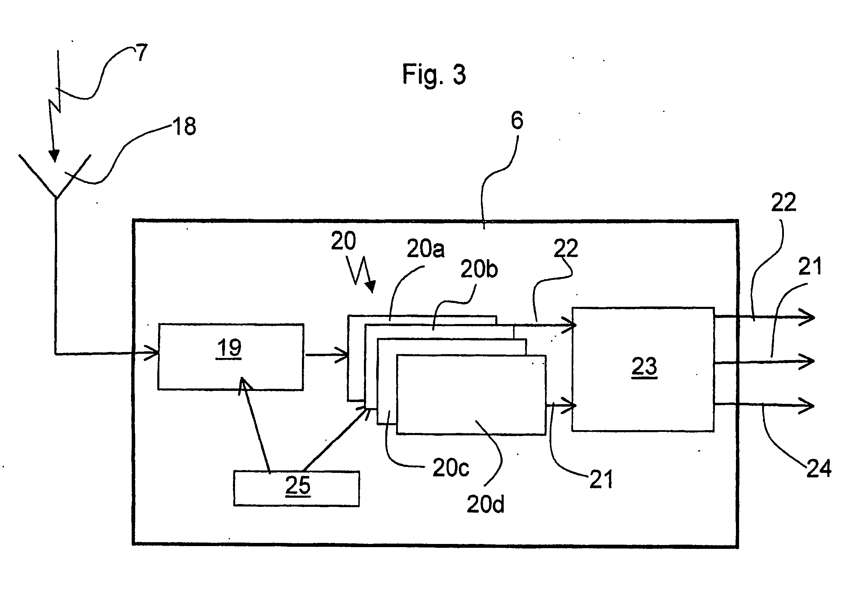

Ce signal de navigation 7 est reçu par un récepteur 6 dont le schéma de principe est représenté figure 3. Ce récepteur 6 comprend une antenne de réception 18 associée à un circuit de réception radiofréquence 19 comprenant de façon traditionnelle une chaîne d'amplification, de filtrage, de conversion de fréquence, et de conversion analogique/numérique. Ce circuit 19 de réception radiofréquence fournit donc un signal modulé numérique à des circuits 20 de traitement du signal, à savoir, un circuit 20a, 20b, 20c, 20d pour chaque signal de navigation 7a, 7b, 7c, 7d issu de chaque satellite 2a, 2b, 2c, 2d de façon à permettre un traitement simultané de ces signaux. Il est à noter qu'il est possible d'utiliser plus de quatre satellites, et donc plus de quatre circuits 20 de traitement dans un récepteur.

Chaque circuit 20 de traitement du signal permet d'extraire des mesures brutes 21 et, le cas échéant, des données (ou messages) de navigation 22 véhiculées par l'un et/ou l'autre des codes du signal de navigation modulé reçu. Les mesures brutes 21 consistent notamment en un calcul de pseudo-distance entre le 2a, 2b, 2c, 2d correspondant et le récepteur 6. Il peut s'agir également d'un calcul dit de "pseudo-vitesse" ou "Doppler intégré" réalisé sur le signal de porteuse. Ces mesures brutes sont traditionnelles et bien connues -notamment dans le cas de la constellation GPS-.

Ces calculs, ainsi que toutes les notions connues en matière de navigation et positionnement par satellite sont décrits par exemple dans le document UNDERSTANDING GPS : PRINCIPLES AND APPLICATIONS, Elliott D. KAPLAN, éditions Artech Housse, 1996.

Les mesures brutes 21 et les données de navigation 22 éventuelles sont fournies à un circuit 23 de calcul de navigation qui fournit d'une part les mesures brutes 21 et les données de navigation 22 qu'il reçoit, et, d'autre part, un résultat 24 de calcul, notamment un signal de position du récepteur 6.

Il est à noter qu'il existe de très nombreuses technologies et architectures différentes connues pour un tel récepteur 6, notamment en ce qui concerne les différents circuits du traitement du signal et de calcul de navigation. Les signaux issus du circuit 23 sont fournis éventuellement à un dispositif de traitement numérique pour leur exploitation ultérieure en vue de la navigation ou du positionnement.

Le récepteur 6 comprend également un circuit d'horloge 25 délivrant une fréquence de référence d'une part au circuit de réception radiofréquence 19, et d'autre part aux différents circuits 20 de traitement du signal.

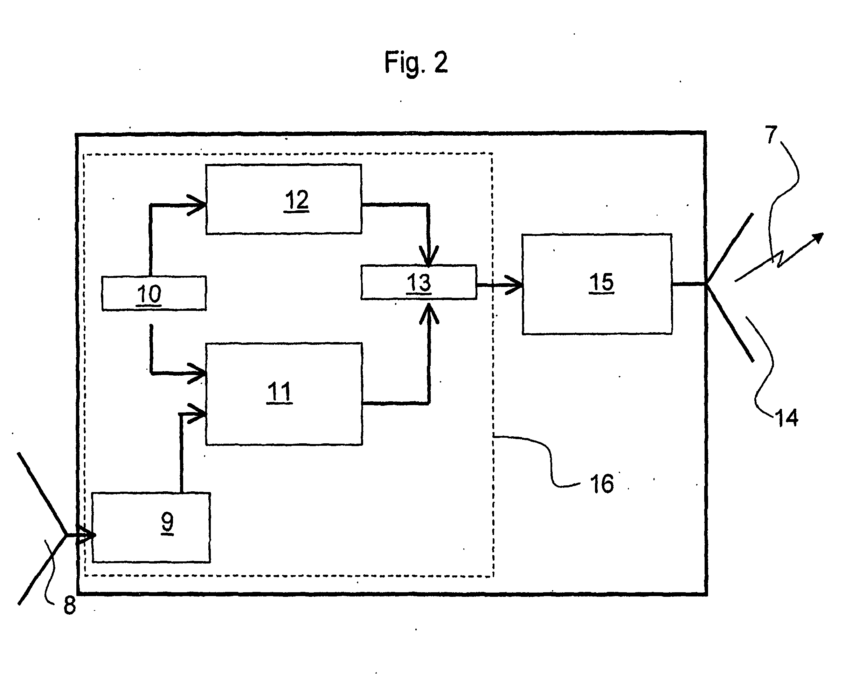

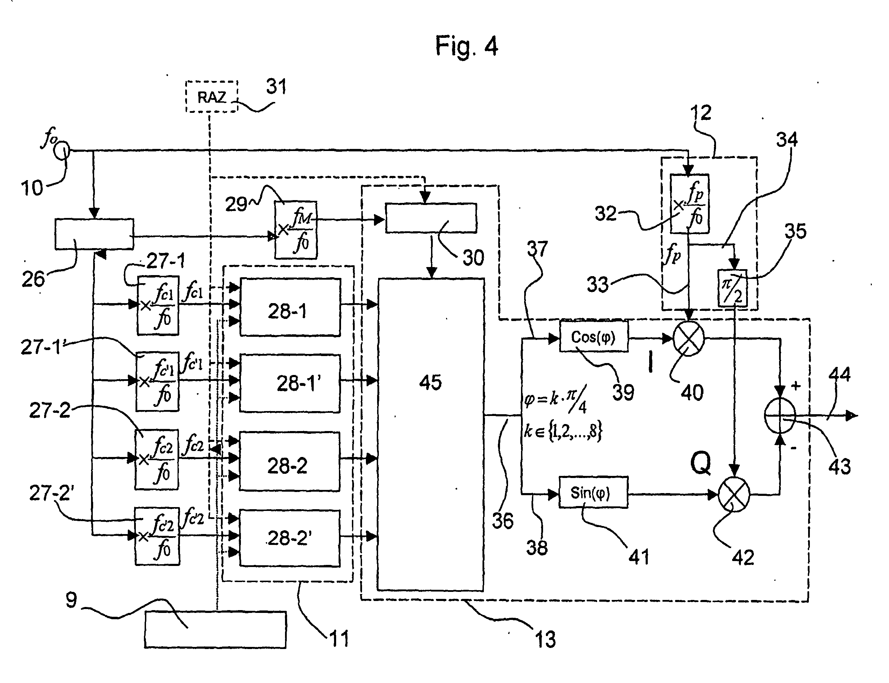

La figure 4 représente plus en détail le bloc 16 comprenant les circuits 9, 10, 11, 12, 13, représentés figure 2 par des traits pointillés, et qui permet de mettre en oeuvre le procédé selon l'invention.

Ce bloc 16 comprend le circuit d'horloge 10 générant un signal analogique d'horloge à la fréquence de référence fo, qui est par exemple de l'ordre de 10,23 MHz. Cette fréquence de référence fo est fournie à un circuit 26 générateur de signaux carrés cadencés à la fréquence de référence f0. Ces signaux carrés à la fréquence de référence f0 sont fournis à quatre convertisseurs de fréquence 27-1, 27-1', 27-2, 27-2' qui délivrent des signaux carrés de fréquence fc1, fc1', fc2, fc2', respectivement, à quatre circuits générateurs de codes de navigation pseudo-aléatoires 28-1, 28-1', 28-2, 28-2', générant respectivement quatre codes de navigation pseudo-aléatoire C1, C1', C2, C2' indépandants, destinés à être incorporés dans le signal de navigation 7. Le circuit 26 générateur de signaux carrés à la fréquence f0 fournit également ces signaux carrés à un convertisseur de fréquence 29 fournissant des signaux carrés à une fréquence fM, qui est la fréquence de modulation, à un compteur 30 cyclique permettant de générer huit valeurs numériques, de 1 à 8, de façon cyclique pour cadencer le circuit modulateur 13 à la fréquence de modulation fM.

Un circuit 31 de réinitialisation permet d'initialiser et de synchroniser au démarrage les quatre circuits 28-1, 28-1', 28-2, 28-2' générateurs des codes, ainsi que le compteur 30, et donc le modulateur 13.

Le circuit récepteur de données 9 fournit éventuellement des données de navigation (messages) à l'un et/ou l'autre des circuits générateurs de codes 28-1, 28-1', 28-2, 28-2', de sorte que ces données de navigation puissent être intégrées dans le code pseudo-aléatoire, mais à une fréquence beaucoup plus faible. Les quatre circuits 28-1, 28-1', 28-2, 28-2' forment le circuit 11 représenté figure 2 ayant pour fonction de générer les codes de navigation pseudo-aléatoires.

Le circuit modulateur 13 est adapté pour réaliser la modulation conformément au procédé de l'invention, selon une modulation 8-PSK d'amplitude constante avec une fréquence de modulation fM définie par les signaux délivrés par le compteur 30.

Le circuit 12 générant le signal de porteuse est formé d'un circuit 32 convertisseur de fréquence recevant le signal analogique d'horloge à la fréquence de référence $f_0$ et fournissant un signal analogique à la fréquence de la porteuse fp. Le signal de porteuse fp est délivré à deux branches de porteuse parallèles dont l'une 33 fournit le signal de porteuse en phase, et l'autre 34 comprend un circuit 35 déphaseur de $\pi/2$ délivrant un signal de porteuse en quadrature à la fréquence fp.

La fréquence de modulation fM est choisie de telle sorte que :

$$8fc \leq fM$$

où fc = Max(fci), fci désignant les rythmes de bribes fc1, fc1', fc2, fc2' des codes de navigation C1, C2, C1', C2', chaque valeur fci étant telle que fM = Ni.fci, Ni étant un nombre entier supérieur ou égal à 8, deux codes de navigation C1, C1' étant modulés en quadrature à la fréquence f1 = fp - fM/8 et deux autres codes de navigation C2, C2' étant modulés en quadrature à la fréquence f2 = fp + fM/8, le signal de navigation modulé présentant une enveloppe constante. En particulier, on choisit fM $\leq$ 400 MHz, et plus particulièrement fM $\leq$ 200 MHz, pour un dispositif embarqué. Max désigne la fonction maximum, fc étant la plus grande valeur de fci.

Les différents rythmes de bribes fci des codes de navigation pseudo-aléatoires (fréquences de cadencement de ces codes) sont tous supérieurs à 0,5 MHz et de préférence supérieurs à 1 MHz. Typiquement, dans la constellation Galiléo, le rythme de bribes envisagé est de 2,046 MHz pour tous les codes.

En pratique, les quatre codes peuvent avoir le même rythme de bribes, c'est-à-dire que fci = fc. Néanmoins, rien n'empêche d'utiliser les codes avec des rythmes différents dès lors qu'ils satisfont à la condition fM = Ni.fci.

La fréquence de la porteuse fp doit être supérieure à 500 MHz, et est typiquement comprise entre 1000 MHz et 1700 MHz. Par exemple, dans le cadre de la constellation Galiléo, la bande E5a est à une fréquence de porteuse de 1176,45 MHz et la bande E5b est à une fréquence qui est de 1207,14 MHz. La bande E1 est à 1589,742 MHz et la bande G1 s'étend jusqu'à 1610 MHz.

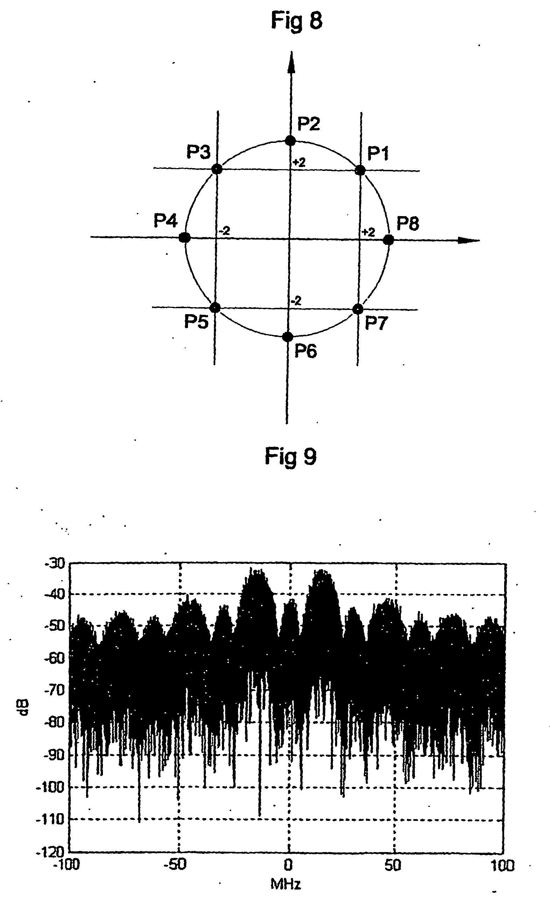

Le circuit modulateur 13 comprend un circuit 45 logique qui fournit sur sa sortie 36 un signal de modulation 8-PSK en bande de base à la fréquence fM véhiculant les quatre codes de navigation C1, C2, C1', C2'. Ce signal de modulation peut ainsi prendre huit états de phase correspondant à la constellation de la modulation 8-PSK, c'est-à-dire aux différents plots P1, P2, P3, P4, P5, P6, P7, P8 de cette constellation, tels que représentés figure 8.

Pour élaborer le signal de modulation, le circuit logique 45 utilise quatre codes de navigation, par exemple selon la table de vérité suivante :

TABLE 1

| C1(t) | -1 | -1 | -1 | -1 | -1 | -1 | -1 | -1 | 1 | 1 | 1 | 1 | 1 | 1 | 1 | 1 |
|---|---|---|---|---|---|---|---|---|---|---|---|---|---|---|---|---|
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | 1 | 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P5 | P4 | P4 | P3 | P6 | P7 | P5 | P2 | P6 | P1 | P3 | P2 | P7 | P8 | P8 | P1 |
| [TM, 2TM[ | P5 | P8 | P4 | P3 | P6 | P7 | P5 | P6 | P2 | P1 | P3 | P2 | P7 | P8 | P4 | P1 |
| [2TM, 3TM[ | P1 | P8 | P4 | P7 | P6 | P7 | P5 | P6 | P2 | P1 | P3 | P2 | P3 | P8 | P4 | P5 |

Suite de tableau

| | | | | | | | | | | | | | | | | |
|---|---|---|---|---|---|---|---|---|---|---|---|---|---|---|---|---|
| [3TM, 4TM[ | P1 | P8 | P8 | P7 | P2 | P7 | P5 | P6 | P2 | P1 | P3 | P6 | P3 | P4 | P4 | P5 |
| [4TM, 5TM[ | P1 | P8 | P8 | P7 | P2 | P3 | P1 | P6 | P2 | P5 | P7 | P6 | P3 | P4 | P4 | P5 |
| [5TM, 6TM[ | P1 | P4 | P8 | P7 | P2 | P3 | P1 | P2 | P6 | P5 | P7 | P6 | P3 | P4 | P8 | P5 |
| [6TM, 7TM[ | P5 | P4 | P8 | P3 | P2 | P3 | P1 | P2 | P6 | P5 | P7 | P6 | P7 | P4 | P8 | P1 |
| [7TM, 8TM[ | P5 | P4 | P4 | P3 | P6 | P3 | P1 | P2 | P6 | P5 | P7 | P2 | P7 | P8 | P8 | P1 |

Dans cette table de vérité, TM est à égal à 1/fM.

Cette table de vérité correspond à l'expression du signal de modulation en bande de base x(t) fourni sur la sortie 36 selon les équations suivantes :

$$x(t) = \frac{2}{\sqrt{2}} \cdot [\text{sign}[\cos(2\pi(fM/8)t + k1\ \pi/2)]] + j.k2\,\text{sign}[\cos(2\ \pi(fM/8) + k1\ \pi/2)]$$

ou

$$x(t) = 2(j)^{k1}.\text{sign}\ [\cos(2\pi(fM/8)t + k2\pi/4)]$$

$$\text{avec } k1 \in \{1,2,3,4\} \text{ et } k2 = \pm 1$$

Ces équations peuvent elles-mêmes être obtenues à partir de l'expression du signal de modulation en bande de base d'une modulation de type LOC à sous-porteuse sinusoïdale, mais en discrétisant cette modulation pour ne retenir que des états de phases ponctuels de même amplitude.

Il est clair qu'il est aussi possible d'utiliser l'une des sept autres tables de vérité définies à partir de cette table de vérité TABLE 1, par simple rotation de n.π/4, n étant un entier compris entre 1 et 7. En fait, la constellation de la figure 8 correspond à huit constellations équivalentes dépendant uniquement de la position choisie pour l'un des plots, par exemple le plot P1.

Il est également à noter que les huit tables de vérité pouvant être obtenues avec une constellation similaire à celle de la figure 8 mais avec des plots parcourus dans le sens de rotation des aiguilles d'une montre (et non en sens inverse des aiguilles d'une montre comme sur la figure 8), sont en fait identiques, à la rotation près, aux huit tables de vérité précédemment définies et peuvent donc aussi être utilisées. En effet, il suffit d'inverser C1, C1' et C2, C2' pour passer d'une constellation parcourue dans un sens à la constellation ayant les mêmes plots mais parcourue en sens inverse.

Egalement, il est possible d'utiliser la table de vérité suivante :

TABLE 2

| | | | | | | | | | | | | | | | | |
|---|---|---|---|---|---|---|---|---|---|---|---|---|---|---|---|---|
| C1(t) | -1 | -1 | -1 | -1 | -1 | -1 | -1 | -1 | 1 | 1 | 1 | 1 | 1 | 1 | 1 | 1 |
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | 1 | 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |

Suite de tableau

| | | | | | | | | | | | | | | | | |
|---|---|---|---|---|---|---|---|---|---|---|---|---|---|---|---|---|
| [0, TM[ | P1 | P8 | P4 | P7 | P6 | P7 | P5 | P6 | P2 | P1 | P3 | P2 | P3 | P8 | P4 | P5 |
| [TM, 2TM[ | P1 | P8 | P8 | P7 | P2 P2 | P7 | P5 | P6 | P2 | P1 | P3 | P6 | P3 | P4 | P4 | P5 |
| [2TM, 3TM[ | P1 | P8 | P8 | P7 | P2 | P3 | P1 | P6 | P2 | P5 | P7 | P6 | P3 | P4 | P4 | P5 |
| [3TM, 4TM[ | P1 | P4 | P8 | P7 | P2 | P3 | P1 | P2 | P6 | P5 | P7 | P6 | P3 | P4 | P8 | P5 |
| [4TM, 5TM[ | P5 | P4 | P8 | P3 | P2 | P3 | P1 | P2 | P6 | P5 | P7 | P6 | P7 | P4 | P8 | P1 |
| [5TM, 6TM[ | P5 | P4 | P4 | P3 | P6 | P3 | P1 | P2 | P6 | P5 | P7 | P2 | P7 | P8 | P8 | P1 |
| [6TM, 7TM[ | P5 | P4 | P4 | P3 | P6 | P7 | P5 | P2 | P6 | P1 | P3 | P2 | P7 | P8 | P8 | P1 |
| [7TM, 8TM[ | P5 | P8 | P4 | P3 | P6 | P7 | P5 | P6 | P2 | P1 | P3 | P2 | P7 | P8 | P4 | P1 |

Dans cette table de vérité, TM est à égal à 1/fM.

Cette table de vérité correspond à l'expression du signal de modulation en bande de base x(t) fourni sur la sortie 36 selon les équations suivantes :

$$x(t) = \frac{2}{\sqrt{2}} \cdot [\text{sign}[\sin(2\pi(fM/8)t + k1\,\pi/2)]] + j.k2\text{sign}[\sin(2\,\pi(fM/8) + k1\,\pi/2)]$$

ou

$$x(t) = 2(j)^{k1}.\text{sign}\,[\sin(2\pi(fM/8)t + k2\pi/4)]$$

$$\text{avec } k1 \in \{1,2,3,4\} \text{ et } k2 = \pm 1$$

Il est aussi possible d'utiliser l'une des sept autres tables de vérité définies à partir de cette table de vérité TABLE 2, par simple rotation de $n.\pi/4$, n étant un entier compris entre 1 et 7.

Là encore, les huit tables de vérité pouvant être obtenues avec une constellation similaire mais avec des plots parcourus en sens inverse, sont en fait identiques, à la rotation près, aux huit tables de vérité précédemment définies et peuvent donc aussi être utilisées.

Il existe donc trente deux tables de vérité dans le groupe de tables de vérité pouvant être utilisées et correspondant à la constellation représentée figure 8 où les huit plots sont répartis symétriquement sur un cercle (amplitude constante) et décalés en phase de $\pi/4$, quatre plots étant situés sur les axes du plan de Fresnel.

Ainsi, le procédé selon l'invention peut être assimilé à une modulation de type BOC alternatif (à deux fréquences f1 et f2 autour de la fréquence de porteuse et séparées de cette fréquence de porteuse par une fréquence de sous-porteuse de valeur fM/8) mais définie à partir d'une sous-porteuse de type cosinus ou sinus (telle que celle utilisée pour une modulation LOC de laquelle on exploite uniquement certains points discrets afin d'assurer que le signal de modulation en bande de base présente une amplitude constante).

Le signal de modulation en bande de base x(t) délivré sur la sortie 36 du circuit 45 logique de modulation est fourni à une branche 37 en phase et à une branche 38 en quadrature. La branche 37 en phase comprend un filtre 39 qui extrait les valeurs en phase I du signal de modulation, et un mélangeur 40 qui les combine au signal de porteuse à la fréquence fp issu de la branche de porteuse en phase 33. De même, la branche en quadrature 38 comprend un filtre 41 qui extrait les valeurs en quadrature Q du signal de modulation et un mélangeur 42 qui module ces valeurs sur les signaux de porteuse à la fréquence fp délivrés par la branche de porteuse en quadrature 34. Les signaux modulés en phase (en sortie de la branche 37) et en quadrature (en sortie de la branche 38) sont combinés par un circuit 43 sommateur en phase délivrant un signal modulé unique sur sa sortie 44 reliée à l'entrée du circuit émetteur d'amplification et de filtrage 15 en vue de l'émission du signal de navigation modulé 7.

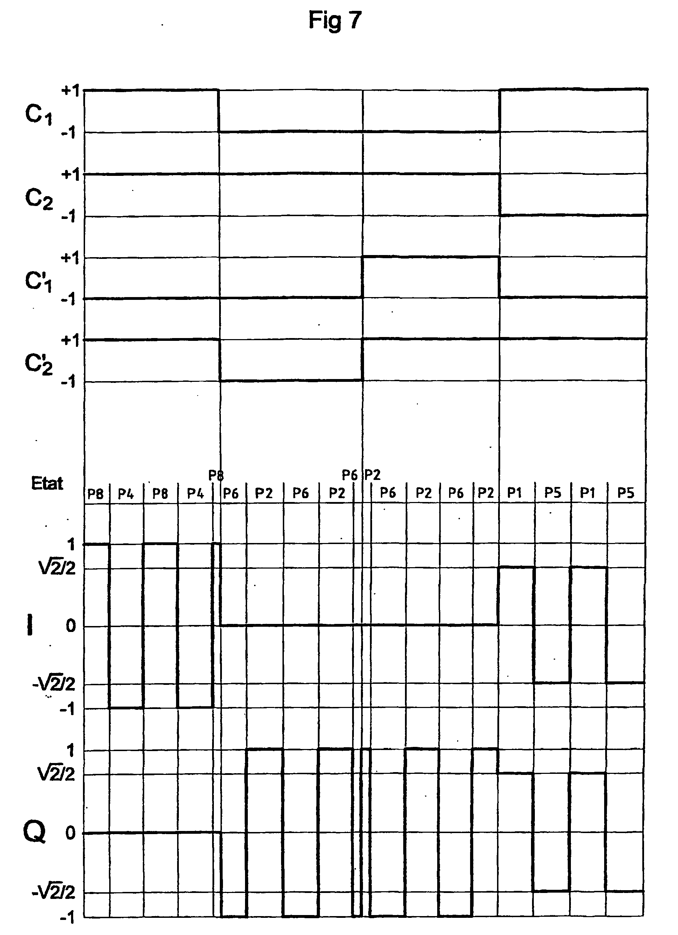

La figure 7 donne un exemple de chronogrammes pour les quatre codes C1, C2, C1', C2' et pour les voies I et Q du signal de modulation utilisées à l'entrée des circuits mélangeurs 40, 42. Avec ce signal de modulation, le signal modulé délivré sur la sortie 44 présente une enveloppe constante.

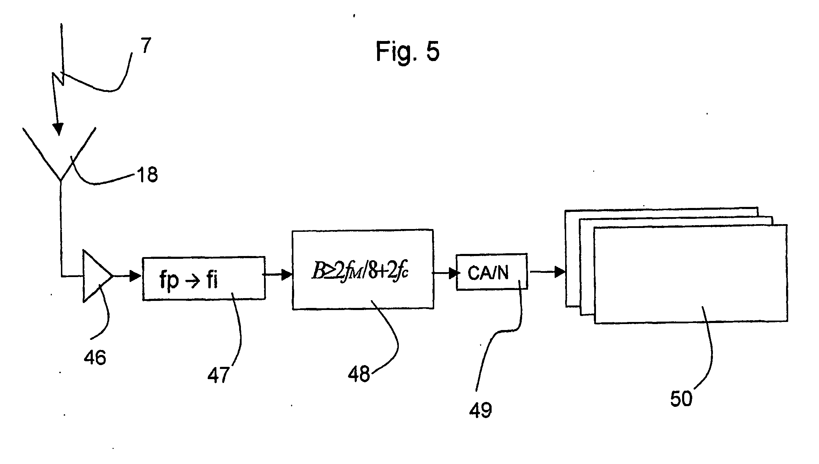

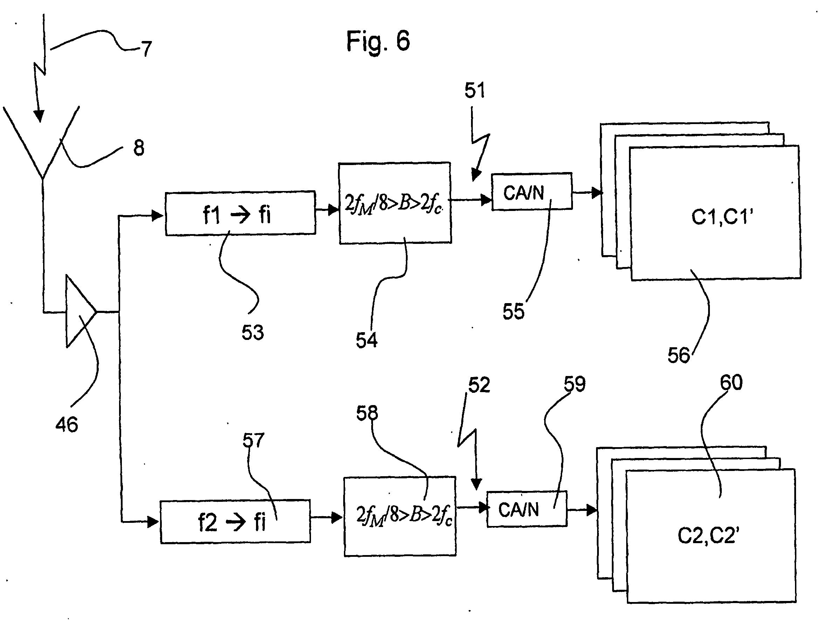

Les figures 5 et 6 représentent deux variantes de réalisation d'une architecture au niveau du récepteur 6 pour l'exploitation du signal de navigation modulé par le dispositif selon l'invention. Dans la variante de la figure 5, on utilise une seule branche de réception et de traitement du signal de navigation. Ainsi, la chaîne de réception radiofréquence comprend l'antenne de réception 18 reliée à un amplificateur à faible bruit 46 suivi d'un circuit 47 de conversion de fréquence, qui convertit le signal reçu de la fréquence fp à une fréquence fi intermédiaire propre au récepteur adaptée pour permettre ensuite une conversion analogique/numérique dans les meilleures conditions possibles. Le signal est ensuite transmis à un filtre passe-bande 48 qui permet de ne conserver dans le signal de navigation modulé que les deux lobes principaux correspondants aux fréquences f1 et f2, en éliminant les composantes en dehors de ces lobes. Ainsi, la bande-passante du filtre passe-bande 48 est supérieure ou égale à 2fM/8 + 2fc, et de préférence de l'ordre de cette valeur correspondant à l'étalement en fréquence des deux lobes du signal de navigation sur les fréquences f1 et f2. Le signal ainsi filtré est fourni à un convertisseur analogique numérique 49 qui délivre un signal numérique correspondant à des circuits 50 de traitement du signal formant ensemble l'un des circuits 20 de traitement du signal décrit ci-dessus en référence à la figure 3. Les différents circuits 50 permettent chacun de réaliser le traitement des différents codes de navigation pseudo-aléatoires C1, C2, C1', C2' conjointement ou non. Le nombre de circuits 50 dépend de l'usage que l'on fait du récepteur et des services accessibles à l'utilisateur de ce récepteur. Il est ainsi possible que le récepteur n'ait l'autorisation d'exploiter qu'une partie des codes, par exemple, C1 et C1'.

Dans la variante de la figure 6, les deux fréquences f1 et f2 sont traitées séparément sur deux branches distinctes. Ainsi, la sortie de l'amplificateur 46 alimente une première branche 51 et une deuxième branche 52 en parallèle. Sur la première branche 51, on traite le lobe centré sur la fréquence f1 du signal de navigation. Cette branche 51 comprend donc un circuit convertisseur 53 de la fréquence f1 à la fréquence intermédiaire fi, suivi d'un filtre passe-bande 54 qui permet de ne conserver que le lobe à la fréquence f1, la bande passante du filtre 54 étant comprise entre 2fM/8 et 2fc, un convertisseur analogique numérique 55 et une pluralité de circuit de traitement du signal 56 pour extraire les deux codes de navigation C1, C1'. De façon similaire, la branche 42 comprend un circuit convertisseur de fréquence 57 (de f2 à fi) suivi d'un filtre passe-bande 58 de bande passante comprise entre 2fM/8 et 2fc, permettant d'extraire les composantes sur le lobe de fréquence f2, un convertisseur analogique numérique 59 et des circuits de traitement du signal 60 pour extraire les codes C2, C2'.

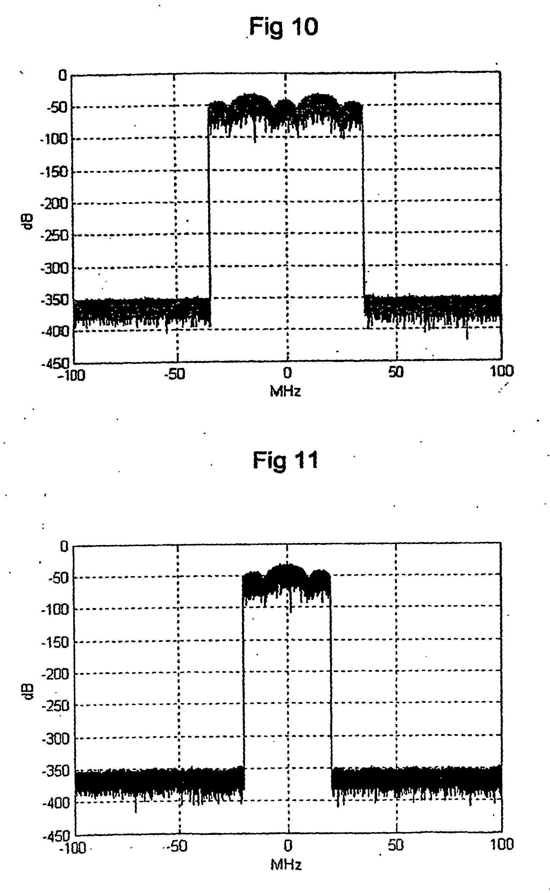

La figure 9 représente un exemple de spectre de signal de navigation modulé tel que transmis par la charge utile (émetteur). La fréquence centrale est fp. Comme on le voit, ce signal comprend deux lobes latéraux principaux, l'un à la fréquence f1, l'autre à la fréquence f2.

La figure 10 représente un exemple de spectre de signal de navigation modulé obtenu après le filtrage passe-bande du filtre 48 de la figure 5 dans un récepteur. Comme on le voit ce signal comprend deux lobes latéraux principaux, l'un à la fréquence f1, l'autre à la fréquence f2.

La figure 11 représente un exemple de spectre de signal de navigation modulé obtenu après le filtrage passe-bande du filtre 54 dans un récepteur de la figure 6. Seul le lobe centré par la fréquence f1 est présent. Ce lobe contient les signaux C1 et C1'.

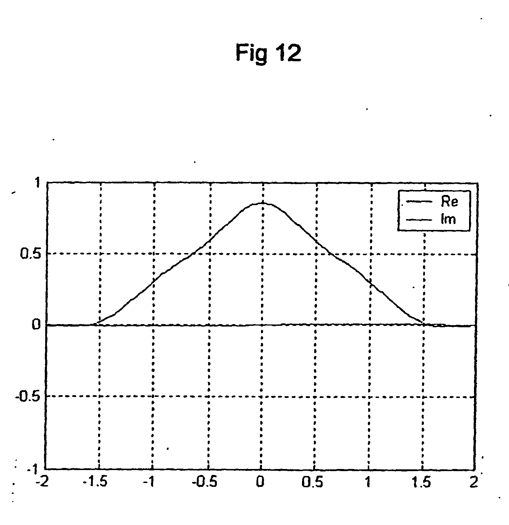

La figure 12 est la fonction de corrélation du signal ayant le spectre de la figure 11 corrélé avec la réplique des codes C1 et C1', telle que générée par le récepteur. Le pic de corrélation (forme quasi-triangulaire) indique la présence des codes C1 et C1' dans le signal de la figure 11, et donc une excellente corrélation.

Les résultats présentés aux figures 11 et 12 ont été obtenus par un logiciel de simulation de signaux de navigation avec une bande passante de 40 MHz pour le filtre 53, une fréquence f1 correspondant à la bande E5a, et une valeur de fM = 120 MHz.

Les codes de navigation utilisés sont quatre codes pseudo-aléatoires du type de ceux envisagés pour la constellation Galiléo.

L'invention décrite ci-dessus et représentée sur les figures peut faire l'objet de nombreuses variantes de réalisation.

En particulier, les architectures de récepteur peuvent être très différentes, et il existe de nombreuses technologies connues en la matière. Les différentes fonctions décrites peuvent également faire l'objet de réalisations structurelles diverses bien connues en elles-mêmes.

En outre, il est également possible d'envisager d'utiliser une modulation 8-PSK non pas symétrique comme représentée et décrite ci-dessus, mais dissymétrique, les points P1 à P8 n'étant pas symétriques les uns des autres autour de l'origine du plan de Fresnel.

De préférence, la valeur de fc est de l'ordre de 10 MHz et la valeur de fM est de l'ordre de 120 MHz. Néanmoins, d'autres valeurs sont possibles et compatibles avec un procédé et un dispositif de navigation selon l'invention.

**Revendications**

1. Procédé de génération d'un signal de navigation modulé (7) destiné à être utilisé pour le positionnement d'un récepteur (6) par liaison descendante, comprenant une pluralité de codes de navigation pseudo-aléatoires de rythmes de bribes supérieurs à 0,5 MHz modulés sur une porteuse de fréquence fp supérieure à 500 MHz, **caractérisé en ce qu'**on module sur la porteuse quatre codes de navigation pseudo-aléatoire C1, C2, C1', C2' selon une modulation 8-PSK d'amplitude constante avec une fréquence de modulation fM telle que :

$$8fc \leq fM$$

où fc = Max(fci), fci désignant les rythmes de bribes fc1, fc1', fc2, fc2' des codes de navigation C1, C2, C1', C2', chaque valeur fci étant telle que fM = Ni.fci, Ni étant un nombre entier supérieur ou égal à 8, deux codes de navigation C1, C1' étant modulés en quadrature à la fréquence f1 = fp - fM/8 et deux autres codes de navigation C2, C2' étant modulés en quadrature à la fréquence f2 = fp + fM/8, le signal de navigation modulé présentant une enveloppe constante.

2. Procédé selon la revendication 1, **caractérisé en ce qu'**on choisit fM ≤ 400 MHz.

3. Procédé selon la revendication 1, pour la génération d'un signal de navigation module (7) à bord d'un satellite spatial, **caractérisé en ce qu'**on choisit fM ≤ 200 MHz.

4. Procédé selon l'une des revendications 1 à 3, **caractérisé en ce qu'**on utilise une modulation 8-PSK d'amplitude constante symétrique dans le plan de Fresnel.

5. Procédé selon l'une des revendications 1 à 3, **caractérisé en ce qu'**on utilise une modulation 8-PSK d'amplitude constante dissymétrique dans le plan de Fresnel.

6. Procédé selon l'une des revendications 1 à 5, **caractérisé en ce qu'**on utilise une modulation 8-PSK d'états de phases égaux à k.π/4, k étant un nombre entier compris entre 1 et 8.

7. Procédé selon l'une des revendications 1 à 6, **caractérisé en ce qu'**on module les quatre codes selon une table de vérité choisie dans le groupe des tables de vérité formé de :

TABLE 1

| C1(t) | -1 | -1 | -1 | -1 | -1 | -1 | -1 | -1 | 1 | 1 | 1 | 1 | 1 | 1 | 1 | 1 |
|---|---|---|---|---|---|---|---|---|---|---|---|---|---|---|---|---|
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | 1 | 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P5 | P4 | P4 | P3 | P6 | P7 | P5 | P2 | P6 | P1 | P3 | P2 | P7 | P8 | P8 | P1 |
| [TM, 2TM[ | P5 | P8 | P4 | P3 | P6 | P7 | P5 | P6 | P2 | P1 | P3 | P2 | P7 | P8 | P4 | P1 |
| [2TM, 3TM[ | P1 | P8 | P4 | P7 | P6 | P7 | P5 | P6 | P2 | P1 | P3 | P2 | P3 | P8 | P4 | P5 |

Suite de tableau

| [3TM, 4TM[ | P1 | P8 | P8 | P7 | P2 | P7 | P5 | P6 | P2 | P1 | P3 | P6 | P3 | P4 | P4 | P5 |
|---|---|---|---|---|---|---|---|---|---|---|---|---|---|---|---|---|
| [4TM, 5TM[ | P1 | P8 | P8 | P7 | P2 | P3 | P1 | P6 | P2 | P5 | P7 | P6 | P3 | P4 | P4 | P5 |
| [5TM, 6TM[ | P1 | P4 | P8 | P7 | P2 | P3 | P1 | P2 | P6 | P5 | P7 | P6 | P3 | P4 | P8 | P5 |
| [6TM, 7TM[ | P5 | P4 | P8 | P3 | P2 | P3 | P1 | P2 | P6 | P5 | P7 | P6 | P7 | P4 | P8 | P1 |
| [7TM, 8TM[ | P5 | P4 | P4 | P3 | P6 | P3 | P1 | P2 | P6 | P5 | P7 | P2 | P7 | P8 | P8 | P1 |

TABLE 2

| | | | | | | | | | | | | | | | | |
|---|---|---|---|---|---|---|---|---|---|---|---|---|---|---|---|---|
| $C1(t)$ | -1 | -1 | -1 | -1 | -1 | -1 | -1 | -1 | 1 | 1 | 1 | 1 | 1 | 1 | 1 | 1 |
| $C2(t)$ | -1 | -1 | -1 | -1 | 1 | 1 | 1 | 1 | -1 | -1 | -1 | -1 | 1 | 1 | 1 | 1 |
| $C1'(t)$ | -1 | -1 | 1 | 1 | -1 | -1 | 1 | 1 | -1 | -1 | 1 | 1 | -1 | -1 | 1 | 1 |
| $C2'(t)$ | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P1 | P8 | P4 | P7 | P6 | P7 | P5 | P6 | P2 | P1 | P3 | P2 | P3 | P8 | P4 | P5 |
| [TM, 2TM[ | P1 | P8 | P8 | P7 | P2 | P7 | P5 | P6 | P2 | P1 | P3 | P6 | P3 | P4 | P4 | P5 |
| [2TM, 3TM[ | P1 | P8 | P8 | P7 | P2 | P3 | P1 | P6 | P2 | P5 | P7 | P6 | P3 | P4 | P4 | P5 |
| [3TM, 4TM[ | P1 | P4 | P8 | P7 | P2 | P3 | P1 | P2 | P6 | P5 | P7 | P6 | P3 | P4 | P8 | P5 |
| [4TM, 5TM[ | P5 | P4 | P8 | P3 | P2 | P3 | P1 | P2 | P6 | P5 | P7 | P6 | P7 | P4 | P8 | P1 |
| [5TM, 6TM[ | P5 | P4 | P4 | P3 | P6 | P3 | P1 | P2 | P6 | P5 | P7 | P2 | P7 | P8 | P8 | P1 |
| [6TM, 7TM[ | P5 | P4 | P4 | P3 | P6 | P7 | P5 | P2 | P6 | P1 | P3 | P2 | P7 | P8 | P8 | P1 |
| [7TM, 8TM[ | P5 | P8 | P4 | P3 | P6 | P7 | P5 | P6 | P2 | P1 | P3 | P2 | P7 | P8 | P4 | P1 |

où P1, P2, P3, P4, P5, P6, P7, P8 sont les différents plots et la constellation 8-PSK, et TM = 1/fM, et des autres tables de vérité issues de ces tables de vérité TABLE 1 et TABLE 2 par rotation de phase de $n.\pi/4$, $n \in \{1,2,3,4,5,6,7\}$ et/ou inversion de sens de parcours de la constellation.

8. Procédé selon l'une des revendications 1 à 7, **caractérisé en ce que** fp est comprise entre 1000 MHz et 1700 MHz.

9. Procédé selon l'une des revendications 1 à 8, **caractérisé en ce que** fc est de l'ordre de 10 MHz.

10. Procédé selon l'une des revendications 1 à 9, **caractérisé en ce que** fM est de l'ordre de 120 MHz.

11. Procédé selon l'une des revendications 1 à 10, **caractérisé en ce que** dans au moins une paire de codes C1, C1' ; C2, C2' modulés en quadrature sur la même fréquence, l'un C1' ; C2' incorpore des données numériques modulées selon une fréquence inférieure à fc /1000.

12. Dispositif de génération d'un signal de navigation modulé (7) destiné à être utilisé pour le positionnement d'un récepteur (6) par liaison descendante, comprenant une pluralité de codes de navigation pseudo-aléatoires de rythmes de bribes supérieurs à 0,5 MHz modulés sur une porteuse de fréquence fp supérieure à 500 MHz, ce dispositif comprenant :

   - un circuit (11) générateur des codes de navigation pseudo-aléatoires,
   - un circuit (13) modulateur par déplacement de phase délivrant le signal de navigation modulé (7) sur la porteuse,
   - un circuit (15) émetteur, comprenant au moins un étage d'amplification de puissance, apte à émettre un signal radiofréquence correspondant au signal de navigation modulé,

   **caractérisé en ce que** le circuit (13) modulateur est adapté pour moduler sur la porteuse quatre codes de navigation pseudo-aléatoires C1, C2, C1', C2' dont les fréquences sont un multiple entier de l'une d'entre elles fc, selon une modulation 8-PSK d'amplitude constante avec une fréquence de modulation fM telle que :

$$8fc \leq fM$$

   où fc = Max(fci), fci désignant les rythmes de bribes fc1, fc1', fc2, fc2' des codes de navigation C1, C2, C1', C2', chaque valeur fci étant telle que fM = Ni.fci, Ni étant un nombre entier supérieur ou égal à 8, deux codes de navigation C1, C1' étant modulés en quadrature à la fréquence f1 = fp - fM/8 et deux autres codes de navigation C2, C2' étant modulés en quadrature à la fréquence f2 = fp + fM/8, le signal de navigation modulé présentant une enveloppe constante.

13. Dispositif selon la revendication 12, **caractérisé en ce que** le circuit (13) modulateur est adapté pour réaliser une modulation 8-PSK avec une fréquence de modulation fM ≤ 400 Mhz.

14. Dispositif selon la revendication 12, **caractérisé en ce que** le circuit (13) modulateur est adapté pour réaliser une modulation 8-PSK avec une fréquence de modulation fM ≤ 200 MHz.

15. Dispositif selon l'une des revendications 12 à 14,
   **caractérisé en ce que** le circuit (13) modulateur est adapté pour réaliser une modulation 8-PSK symétrique d'amplitude constante dans le plan de Fresnel.

16. Dispositif selon l'une des revendications 12 à 14,
   **caractérisé en ce que** le circuit (13) modulateur est adapté pour réaliser une modulation 8-PSK d'amplitude constante dissymétrique dans le plan de Fresnel.

17. Dispositif selon l'une des revendications 12 à 16,
   **caractérisé en ce que** le circuit (13) modulateur est adapté pour réaliser une modulation 8-PSK de phases égales à k.$\pi$/4, k étant un nombre entier compris entre 1 et 8.

18. Dispositif selon l'une des revendications 12 à 17,
   **caractérisé en ce que** le circuit (13) modulateur est adapté pour moduler les quatre codes selon une table de vérité choisie dans le groupe des tables de vérité formé de :

TABLE 1

| C1(t) | -1 | -1 | -1 | -1 | -1 | -1 | -1 | -1 | 1 | 1 | 1 | 1 | 1 | 1 | 1 | 1 |
|---|---|---|---|---|---|---|---|---|---|---|---|---|---|---|---|---|
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | 1 | 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |

Suite de tableau

| | | | | | | | | | | | | | | | | |
|---|---|---|---|---|---|---|---|---|---|---|---|---|---|---|---|---|
| [0, TM[ | P5 | P4 | P4 | P3 | P6 | P7 | P5 | P2 | P6 | P1 | P3 | P2 | P7 | P8 | P8 | P1 |
| [TM, 2TM[ | P5 | P8 | P4 | P3 | P6 | P7 | P5 | P6 | P2 | P1 | P3 | P2 | P7 | P8 | P4 | P1 |
| [2TM, 3TM[ | P1 | P8 | P4 | P7 | P6 | P7 | P5 | P6 | P2 | P1 | P3 | P2 | P3 | P8 | P4 | P5 |
| [3TM, 4TM[ | P1 | P8 | P8 | P7 | P2 | P7 | P5 | P6 | P2 | P1 | P3 | P6 | P3 | P4 | P4 | P5 |
| [4TM, 5TM[ | P1 | P8 | P8 | P7 | P2 | P3 | P1 | P6 | P2 | P5 | P7 | P6 | P3 | P4 | P4 | P5 |
| [5TM, 6TM[ | P1 | P4 | P8 | P7 | P2 | P3 | P1 | P2 | P6 | P5 | P7 | P6 | P3 | P4 | P8 | P5 |
| [6TM, 7TM[ | P5 | P4 | P8 | P3 | P2 | P3 | P1 | P2 | P6 | P5 | P7 | P6 | P7 | P4 | P8 | P1 |
| [7TM, 8TM[ | P5 | P4 | P4 | P3 | P6 | P3 | P1 | P2 | P6 | P5 | P7 | P2 | P7 | P8 | P8 | P1 |

TABLE 2

| | | | | | | | | | | | | | | | | |
|---|---|---|---|---|---|---|---|---|---|---|---|---|---|---|---|---|
| C1 (t) | -1 | -1 | -1 | -1 | -1 | -1 | -1 | -1 | 1 | 1 | 1 | 1 | 1 | 1 | 1 | 1 |
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | .1 1 | 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P1 | P8 | P4 | P7 | P6 | P7 | P5 | P6 | P2 | P1 | P3 | P2 | P3 | P8 | P4 | P5 |
| [TM, 2TM[ | P1 | P8 | P8 | P7 | P2 | P7 | P5 | P6 | P2 | P1 | P3 | P6 | P3 | P4 | P4 | P5 |
| [2TM, 3TM[ | P1 | P8 | P8 | P7 | P2 | P3 | P1 | P6 | P2 | P5 | P7 | P6 | P3 | P4 | P4 | P5 |
| [3TM, 4TM[ | P1 | P4 | P8 | P7 | P2 | P3 | P1 | P2 | P6 | P5 | P7 | P6 | P3 | P4 | P8 | P5 |
| [4TM, 5TM[ | P5 | P4 | P8 | P3 | P2 | P3 | P1 | P2 | P6 | P5 | P7 | P6 | P7 | P4 | P8 | P1 |
| [5TM, 6TM[ | P5 | P4 | P4 | P3 | P6 | P3 | P1 | P2 | P6 | P5 | P7 | P2 | P7 | P8 | P8 | P1 |
| [6TM, 7TM[ | P5 | P4 | P4 | P3 | P6 | P7 | P5 | P2 | P6 | P1 | P3 | P2 | P7 | P8 | P8 | P1 |
| [7TM, 8TM[ | P5 | P8 | P4 | P3 | P6 | P7 | P5 | P6 | P2 | P1 | P3 | P2 | P7 | P8 | P4 | P1 |

où P1, P2, P3, P4, P5, P6, P7, P8 sont les différents plots et la constellation 8-PSK, et TM = 1/fM, et des autres tables de vérité issues de ces tables de vérité, TABLE 1 et TABLE 2, par rotation de phase de n.$\pi$/4, n $\in$ {1,2,3,4,5,6,7} et/ou inversion de sens de parcours de la constellation.

**19.** Dispositif selon l'une des revendications 12 à 17,

**caractérisé en ce que** fp est comprise entre 1000 MHz et 1700 MHz.

**20.** Dispositif selon l'une des revendications 12 à 19, **caractérisé en ce que** fc est de l'ordre de 10 MHz.

**21.** Dispositif selon l'une des revendications 12 à 20, **caractérisé en ce que** fM est de l'ordre de 120 MHz.

**22.** Dispositif selon l'une des revendications 12 à 21,
**caractérisé en ce qu'**il est adapté pour que dans au moins une paire de codes modulés en quadrature sur la même fréquence, l'un C1', C2' incorpore des données numériques modulées selon une fréquence inférieure à fc/1000.

**Claims**

**1.** Method of generating a modulated navigation signal (7) which is intended to be used to position a downlink receiver (6), comprising multiple pseudorandom navigation codes of chip rhythms greater than 0.5 MHz, modulated onto a carrier of frequency fp greater than 500 MHz, **characterized in that** four pseudorandom navigation codes C1, C2, C1' C2' are modulated onto the carrier according to an 8-PSK modulation of constant amplitude with a modulation frequency fM such that:

$$8fc \leq fM$$

where fc = Max(fci), and fci designates the chip rhythms fc1, fc1', fc2, fc2' of the navigation codes C1, C2, C1', C2', each fci value being such that fM = Ni.fci, Ni being an integer greater than or equal to 8, two navigation codes C1, C1' being quadrature modulated at frequency f1 = fp-fM/8, and two other navigation codes C2, C2' being quadrature modulated at frequency f2 = fp+fM/8, and the modulated navigation signal presenting a constant envelope.

**2.** Method according to claim 1, **characterized in that** fM is chosen to be ≤ 400 MHz.

**3.** Method according to claim 1, for generating a modulated navigation signal (7) on board a space satellite, **characterized in that** fM is chosen to be ≤ 200 MHz.

**4.** Method according to one of claims 1 to 3, **characterized in that** 8-PSK modulation of symmetrical constant amplitude in the Fresnel plan is used.

**5.** Method according to one of claims 1 to 3, **characterized in that** 8-PSK modulation of asymmetrical constant amplitude in the Fresnel plan is used.

**6.** Method according to one of claims 1 to 5, **characterized in that** 8-PSK modulation of phase states equal to k.n/4, where k is an integer between 1 and 8, is used.

**7.** Method according to one of claims 1 to 6, **characterized in that** the four codes are modulated according to a truth table which is chosen from the group of truth tables formed from:

TABLE 1

| C1(t) | -1 | -1 | -1 | -1 | -1 | -1 | -1 | -1 | 1 | 1 | 1 | 1 | 1 | 1 | 1 | 1 |
|---|---|---|---|---|---|---|---|---|---|---|---|---|---|---|---|---|
| C2 (t) | -1 | -1 | -1 | -1 | 1 | 1 | 1 | 1 | -1 | -1 | -1 | -1 | 1 | 1 | 1 | 1 |
| C1' (t) | -1 | -1 | 1 | 1 | -1 | -1 | 1 | 1 | -1 | -1 | 1 | 1 | -1 | -1 | 1 | 1 |
| C2' (t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P5 | P4 | P4 | P3 | P6 | P7 | P5 | P2 | P6 | P1 | P3 | P2 | P7 | P8 | P8 | P1 |

Table continued

| | | | | | | | | | | | | | | | | |
|---|---|---|---|---|---|---|---|---|---|---|---|---|---|---|---|---|
| [TM, 2TM[ | P5 | P8 | P4 | P3 | P6 | P7 | P5 | P6 | P2 | P1 | P3 | P2 | P7 | P8 | P4 | P1 |
| [2TM, 3TM[ | P1 | P8 | P4 | P7 | P6 | P7 | P5 | P6 | P2 | P1 | P3 | P2 | P3 | P8 | P4 | P5 |
| [3TM, 4TM[ | P1 | P8 | P8 | P7 | P2 | P7 | P5 | P6 | P2 | P1 | P3 | P6 | P3 | P4 | P4 | P5 |
| [4TM, 5TM[ | P1 | P8 | P8 | P7 | P2 | P3 | P1 | P6 | P2 | P5 | P7 | P6 | P3 | P4 | P4 | P5 |
| [5TM, 6TM[ | P1 | P4 | P8 | P7 | P2 | P3 | P1 | P2 | P6 | P5 | P7 | P6 | P3 | P4 | P8 | P5 |
| [6TM, 7TM[ | P5 | P4 | P8 | P3 | P2 | P3 | P1 | P2 | P6 | P5 | P7 | P6 | P7 | P4 | P8 | P1 |
| [7TM, 8TM[ | P5 | P4 | P4 | P3 | P6 | P3 | P1 | P2 | P6 | P5 | P7 | P2 | P7 | P8 | P8 | P1 |

TABLE 2

| | | | | | | | | | | | | | | | | |
|---|---|---|---|---|---|---|---|---|---|---|---|---|---|---|---|---|
| C1 (t) | -1 | -1 | -1 | -1 | -1 | -1 | -1 | -1 | 1 | 1 | 1 | 1 | 1 | 1 | 1 | 1 |
| C2 (t) | -1 | -1 | -1 | -1 | 1 | 1 | 1 | 1 | -1 | -1 | -1 | -1 | 1 | 1 | 1 | 1 |
| C1' (t) | -1 | -1 | 1 | 1 | -1 | -1 | 1 | 1 | -1 | -1 | 1 | 1 | -1 | -1 | 1 | 1 |
| C2' (t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P1 | P8 | P4 | P7 | P6 | P7 | P5 | P6 | P2 | P1 | P3 | P2 | P3 | P8 | P4 | P5 |
| [TM, 2TM[ | P1 | P8 | P8 | P7 | P2 | P7 | P5 | P6 | P2 | P1 | P3 | P6 | P3 | P4 | P4 | P5 |
| [2TM, 3TM[ | P1 | P8 | P8 | P7 | P2 | P3 | P1 | P6 | P2 | P5 | P7 | P6 | P3 | P4 | P4 | P5 |
| [3TM, 4TM[ | P1 | P4 | P8 | P7 | P2 | P3 | P1 | P2 | P6 | P5 | P7 | P6 | P3 | P4 | P8 | P5 |
| [4TM, 5TM[ | P5 | P4 | P8 | P3 | P2 | P3 | P1 | P2 | P6 | P5 | P7 | P6 | P7 | P4 | P8 | P1 |
| [5TM, 6TM[ | P5 | P4 | P4 | P3 | P6 | P3 | P1 | P2 | P6 | P5 | P7 | P2 | P7 | P8 | P8 | P1 |
| [6TM, 7TM[ | P5 | P4 | P4 | P3 | P6 | P7 | P5 | P2 | P6 | P1 | P3 | P2 | P7 | P8 | P8 | P1 |
| [7TM, 8TM[ | P5 | P8 | P4 | P3 | P6 | P7 | P5 | P6 | P2 | P1 | P3 | P2 | P7 | P8 | P4 | P1 |

where P1, P2, P3, P4, P5, P6, P7, P8 are the various contacts and the 8-PSK constellation, and TM = 1/fM, and other truth tables derived from these truth tables TABLE 1 and TABLE 2 by phase rotation by n.n/4, n ∈ {1,2,3,4,5,6,7} and/or reversal of the direction of the path of the constellation.

**8.** Method according to one of claims 1 to 7, **characterized in that** fp is between 1000 MHz and 1700 MHz.

**9.** Method according to one of claims 1 to 8, **characterized in that** fc is of the order of 10 MHz.

10. Method according to one of claims 1 to 9, **characterized in that** fM is of the order of 120 MHz.

11. Method according to one of claims 1 to 10, **characterized in that** in at least one pair of codes C1, C1; C2, C2' which are quadrature modulated onto the same frequency, one C1'; C2' incorporates digital data which is modulated according to a frequency less than fc/1000.

12. Device for generating a modulated navigation signal (7) which is intended to be used to position a downlink receiver (6), comprising multiple pseudorandom navigation codes of chip rhythms greater than 0.5 MHz, modulated onto a carrier of frequency fp greater than 500 MHz, this device comprising:

    - a circuit (11) to generate pseudorandom navigation codes,
    - a phase-shifting modulator circuit (13) which supplies the modulated navigation signal (7) on the carrier,
    - an emitter circuit (15), comprising at least one power amplification stage, and suitable for emitting a radio frequency signal corresponding to the modulated navigation signal,

**characterized in that** the modulator circuit (13) is suitable for modulating, on the carrier, four pseudorandom navigation codes C1, C2, C1', C2' of which the frequencies are an integer multiple of one of them fc, according to an 8-PSK modulation of constant amplitude with a modulation frequency fM such that:

$$8\,fc \leq fM$$

where fc = Max(fci), and fci designates the chip rhythms fc1, fc1', fc2, fc2' of the navigation codes C1, C2, C1', C2', each fci value being such that fM = Ni.fci, Ni being an integer greater than or equal to 8, two navigation codes C1, C1' being quadrature modulated at frequency f1 = fp-fM/8, and two other navigation codes C2, C2' being quadrature modulated at frequency f2 = fp+fM/8, and the modulated navigation signal presenting a constant envelope.

13. Device according to claim 12, **characterized in that** the modulator circuit (13) is suitable for implementing an 8-PSK modulation with a modulation frequency fM $\leq$ 400 MHz.

14. Device according to claim 12, **characterized in that** the modulator circuit (13) is suitable for implementing an 8-PSK modulation with a modulation frequency fM $\leq$ 200 MHz.

15. Device according to one of claims 12 to 14, **characterized in that** the modulator circuit (13) is suitable for implementing 8-PSK modulation of symmetrical constant amplitude in the Fresnel plan.

16. Device according to one of claims 12 to 14, **characterized in that** the modulator circuit (13) is suitable for implementing 8-PSK modulation of asymmetrical constant amplitude in the Fresnel plan.

17. Device according to one of claims 12 to 16, **characterized in that** the modulator circuit (13) is suitable for implementing 8-PSK modulation of phase states equal to k.n/4, where k is an integer between 1 and 8.

18. Device according to one of claims 12 to 17, **characterized in that** the modulator circuit (13) is suitable for modulating the four codes according to a truth table which is chosen from the group of truth tables formed from:

TABLE 1

| C1 (t) | -1 | -1 | -1 | -1 | -1 | -1 | -1 | -1 | 1 | 1 | 1 | 1 | 1 | 1 | 1 | 1 |
| C2 (t) | -1 | -1 | -1 | -1 | 1 | 1 | 1 | 1 | -1 | -1 | -1 | -1 | 1 | 1 | 1 | 1 |
| C1' (t) | -1 | -1 | 1 | 1 | -1 | -1 | 1 | 1 | -1 | -1 | 1 | 1 | -1 | -1 | 1 | 1 |
| C2' (t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P5 | P4 | P4 | P3 | P6 | P7 | P5 | P2 | P6 | P1 | P3 | P2 | P7 | P8 | P8 | P1 |

Table continued

| [TM, 2TM[ | P5 | P8 | P4 | P3 | P6 | P7 | P5 | P6 | P2 | P1 | P3 | P2 | P7 | P8 | P4 | P1 |
|---|---|---|---|---|---|---|---|---|---|---|---|---|---|---|---|---|
| [2TM, 3TM[ | P1 | P8 | P4 | P7 | P6 | P7 | P5 | P6 | P2 | P1 | P3 | P2 | P3 | P8 | P4 | P5 |
| [3TM, 4TM[ | P1 | P8 | P8 | P7 | P2 | P7 | P5 | P6 | P2 | P1 | P3 | P6 | P3 | P4 | P4 | P5 |
| [4TM, 5TM[ | P1 | P8 | P8 | P7 | P2 | P3 | P1 | P6 | P2 | P5 | P7 | P6 | P3 | P4 | P4 | P5 |
| [5TM, 6TM[ | P1 | P4 | P8 | P7 | P2 | P3 | P1 | P2 | P6 | P5 | P7 | P6 | P3 | P4 | P8 | P5 |
| [6TM, 7TM[ | P5 | P4 | P8 | P3 | P2 | P3 | P1 | P2 | P6 | P5 | P7 | P6 | P7 | P4 | P8 | P1 |
| [7TM, 8TM[ | P5 | P4 | P4 | P3 | P6 | P3 | P1 | P2 | P6 | P5 | P7 | P2 | P7 | P8 | P8 | P1 |

TABLE 2

| C1 (t) | -1 | -1 | -1 | -1 | -1 | -1 | -1 | -1 | 1 | 1 | 1 | 1 | 1 | 1 | 1 | 1 |
|---|---|---|---|---|---|---|---|---|---|---|---|---|---|---|---|---|
| C2 (t) | -1 | -1 | -1 | -1 | 1 | 1 | 1 | 1 | -1 | -1 | -1 | -1 | 1 | 1 | 1 | 1 |
| C1' (t) | -1 | -1 | 1 | 1 | -1 | -1 | 1 | 1 | -1 | -1 | 1 | 1 | -1 | -1 | 1 | 1 |
| C2' (t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P1 | P8 | P4 | P7 | P6 | P7 | P5 | P6 | P2 | P1 | P3 | P2 | P3 | P8 | P4 | P5 |
| [TM, 2TM[ | P1 | P8 | P8 | P7 | P2 | P7 | P5 | P6 | P2 | P1 | P3 | P6 | P3 | P4 | P4 | P5 |
| [2TM, 3TM[ | P1 | P8 | P8 | P7 | P2 | P3 | P1 | P6 | P2 | P5 | P7 | P6 | P3 | P4 | P4 | P5 |
| [3TM, 4TM[ | P1 | P4 | P8 | P7 | P2 | P3 | P1 | P2 | P6 | P5 | P7 | P6 | P3 | P4 | P8 | P5 |
| [4TM, 5TM[ | P5 | P4 | P8 | P3 | P2 | P3 | P1 | P2 | P6 | P5 | P7 | P6 | P7 | P4 | P8 | P1 |
| [5TM, 6TM[ | P5 | P4 | P4 | P3 | P6 | P3 | P1 | P2 | P6 | P5 | P7 | P2 | P7 | P8 | P8 | P1 |
| [6TM, 7TM[ | P5 | P4 | P4 | P3 | P6 | P7 | P5 | P2 | P6 | P1 | P3 | P2 | P7 | P8 | P8 | P1 |
| [7TM, 8TM[ | P5 | P8 | P4 | P3 | P6 | P7 | P5 | P6 | P2 | P1 | P3 | P2 | P7 | P8 | P4 | P1 |

where P1, P2, P3, P4, P5, P6, P7, P8 are the various contacts and the 8-PSK constellation, and TM = 1/fM, and other truth tables derived from these truth tables TABLE 1 and TABLE 2 by phase rotation by n.n/4, n ∈ {1,2,3,4,5,6,7} and/or reversal of the direction of the path of the constellation.

19. Device according to one of claims 12 to 17, **characterized in that** fp is between 1000 MHz and 1700 MHz.

20. Device according to one of claims 12 to 19, **characterized in that** fc is of the order of 10 MHz.

**EP 1 570 287 B1**

**21.** Device according to one of claims 12 to 20, **characterized in that** fM is of the order of 120 MHz.

**22.** Device according to one of claims 12 to 21, **characterized in that** it is adapted so that in at least one pair of codes which are quadrature modulated onto the same frequency, one C1', C2' incorporates digital data which is modulated according to a frequency less than fc/1000.

**Patentansprüche**

**1.** Verfahren zum Erzeugen eines modulierten Navigationssignals (7), das zum Positionieren eines Empfängers (6) durch eine Abwärtsverbindung verwendet wird, umfassend eine Mehrzahl von pseudozufälligen Navigationscodes von Chipraten über 0,5 MHz, die auf einer Trägerwelle mit einer Frequenz fp über 500 MHz moduliert sind, **dadurch gekennzeichnet, dass** auf der Trägerwelle vier pseudozufällige Navigationscodes C1, C2, C1', C2' gemäß einer konstanten 8-PSK Amplitudenmodulation mit einer Modulationsfrequenz fM moduliert werden, so dass:

$$8fc \leq fM$$

ist, wobei fc = Max(fci), wobei fci die Chipraten fc1, fc1', fc2, fc2' von Navigationscodes C1, C2, C1' C2' bedeutet, wobei jeder fci-Wert so ist, dass fM = Ni.fci, wobei Ni eine ganze Zahl gleich oder größer als 8 ist, wobei zwei Navigationscodes C1, C1' auf die Frequenz f1 = fp - fM/8 quadraturmoduliert sind, und zwei weitere Navigationscodes C2, C2' auf die Frequenz f2 = fp + fM/8 quadraturmoduliert werden, wobei das modulierte Navigationssignal eine konstante Hüllkurve aufweist.

**2.** Verfahren nach Anspruch 1, **dadurch gekennzeichnet, dass** fM ≤ 400 MHz gewählt wird.

**3.** Verfahren nach Anspruch 1 zur Erzeugung eines modulierten Navigationssignals (7) an Bord eines Raumsatelliten, **dadurch gekennzeichnet, dass** fM ≤ 200 MHz gewählt wird.

**4.** Verfahren nach einem der Ansprüche 1 bis 3, **dadurch gekennzeichnet, dass** eine in der Fresnel-Ebene symmetrische konstante 8-PSK Amplitudenmodulation verwendet wird.

**5.** Verfahren nach einem der Ansprüche 1 bis 3, **dadurch gekennzeichnet, dass** eine in der Fresnel-Ebene asymmetrische konstante 8-PSK Amplitudenmodulation verwendet wird.

**6.** Verfahren nach einem der Ansprüche 1 bis 5, **dadurch gekennzeichnet, dass** eine 8-PSK Modulation mit Phasenzuständen gleich k.π/4 verwendet wird, wobei k eine ganze Zahl zwischen 1 und 8 ist.

**7.** Verfahren nach einem der Ansprüche 1 bis 6, **dadurch gekennzeichnet, dass** die vier Codes gemäß einer Wahrheitstabelle moduliert werden, die aus der folgenden Gruppe von Wahrheitstabellen ausgewählt wird:

TABELLE 1

| C1(t) | -1 | -1 | -1 | -1 | -1 | -1 | -1 | -1 | 1 | 1 | 1 | 1 | 1 | 1 | 1 | 1 |
|---|---|---|---|---|---|---|---|---|---|---|---|---|---|---|---|---|
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | 1 | 1 1 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P5 | P4 | P4 | P3 | P6 | P7 | P5 | P2 | P6 | P1 | P3 | P2 | P7 | P8 | P8 | P1 |

Tabelle fortgesetzt

| | | | | | | | | | | | | | | | | |
|---|---|---|---|---|---|---|---|---|---|---|---|---|---|---|---|---|
| [TM, 2TM[ | P5 | P8 | P4 | P3 | P6 | P7 | P5 | P6 | P2 | P1 | P3 | P2 | P7 | P8 | P4 | P1 |
| [2TM, 3TM[ | P1 | P8 | P4 | P7 | P6 | P7 | P5 | P6 | P2 | P1 | P3 | P2 | P3 | P8 | P4 | P5 |
| [3TM, 4TM[ | P1 | P8 | P8 | P7 | P2 | P7 | P5 | P6 | P2 | P1 | P3 | P6 | P3 | P4 | P4 | P5 |
| [4TM, 5TM[ | P1 | P8 | P8 | P7 | P2 | P3 | P1 | P6 | P2 | P5 | P7 | P6 | P3 | P4 | P4 | P5 |
| [5TM, 6TM[ | P1 | P4 | P8 | P7 | P2 | P3 | P1 | P2 | P6 | P5 | P7 | P6 | P3 | P4 | P8 | P5 |
| [6TM, 7TM[ | P5 | P4 | P8 | P3 | P2 | P3 | P1 | P2 | P6 | P5 | P7 | P6 | P7 | P4 | P8 | P1 |
| [7TM, 8TM[ | P5 | P4 | P4 | P3 | P6 | P3 | P1 | P2 | P6 | P5 | P7 | P2 | P7 | P8 | P8 | P1 |

TABELLE 2

| | | | | | | | | | | | | | | | | |
|---|---|---|---|---|---|---|---|---|---|---|---|---|---|---|---|---|
| C1(t) | -1 | -1 | -1 | -1 | -1 | -1 | -1 | -1 | 1 | 1 | 1 | 1 | 1 | 1 | 1 | 1 |
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | 1 | 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P1 | P8 | P4 | P7 | P6 | P7 | P5 | P6 | P2 | P1 | P3 | P2 | P3 | P8 | P4 | P5 |
| [TM, 2TM[ | P1 | P8 | P8 | P7 | P2 | P7 | P5 | P6 | P2 | P1 | P3 | P6 | P3 | P4 | P4 | P5 |
| [2TM, 3TM[ | P1 | P8 | P8 | P7 | P2 | P3 | P1 | P6 | P2 | P5 | P7 | P6 | P3 | P4 | P4 | P5 |
| [ 3TM, 4TM [ | P1 | P4 | P8 | P7 | P2 | P3 | P1 | P2 | P6 | P5 | P7 | P6 | P3 | P4 | P8 | P5 |
| [ 4TM, 5TM [ | P5 | P4 | P8 | P3 | P2 | P3 | P1 | P2 | P6 | P5 | P7 | P6 | P7 | P4 | P8 | P1 |
| [ 5TM, 6TM [ | P5 | P4 | P4 | P3 | P6 | P3 | P1 | P2 | P6 | P5 | P7 | P2 | P7 | P8 | P8 | P1 |
| [ 6TM, 7TM [ | P5 | P4 | P4 | P3 | P6 | P7 | P5 | P2 | P6 | P1 | P3 | P2 | P7 | P8 | P8 | P1 |
| [ 7TM, 8TM [ | P5 | P8 | P4 | P3 | P6 | P7 | P5 | P6 | P2 | P1 | P3 | P2 | P7 | P8 | P4 | P1 |

wobei P1, P2, P3, P4, P5, P6, P7, P8 die unterschiedlichen Plots und die Konstellation 8-PSK sind und TM = 1/fM ist, und gemäß anderen Wahrheitstabellen, die durch Phasenrotation von $n.\pi/4$ aus diesen Wahrheitstabellen TABELLE 1 und TABELLE 2 hervorgehen, wobei $n \in \{1,2,3,4,5,6,7\}$ und/oder eine Verlaufsrichtungsumkehr der Konstellation ist.

**8.** Verfahren nach einem der Ansprüche 1 bis 7, **dadurch gekennzeichnet, dass** fp zwischen 1000 MHz und 1700 MHz liegt.

**9.** Verfahren nach einem der Ansprüche 1 bis 8, **dadurch gekennzeichnet, dass** fc bei etwa 10 MHz liegt.

**10.** Verfahren nach einem der Ansprüche 1 bis 9, **dadurch gekennzeichnet, dass** fM bei etwa 120 MHz liegt.

**11.** Verfahren nach einem der Ansprüche 1 bis 10, **dadurch gekennzeichnet, dass** in wenigstens einem Codepaar C1, C1'; C2, C2', das auf derselben Frequenz quadraturmoduliert ist, ein C1'; C2' digitale Daten enthält, die gemäß einer Frequenz moduliert sind, die kleiner als fc/1000 ist.

**12.** Vorrichtung zum Erzeugen eines modulierten Navigationssignals (7) für die Verwendung zum Positionieren eines Empfängers (6) durch eine Abwärtsverbindung, umfassend eine Mehrzahl von pseudozufälligen Navigationscodes mit Chipraten über 0,5 MHz, die auf einer Trägerwelle mit einer Frequenz fp über 500 MHz moduliert sind, wobei diese Vorrichtung Folgendes umfasst:

   - eine Generatorschaltung (11) für pseudozufällige Navigationscodes,
   - eine Modulatorschaltung (13) durch Phasenverschiebung, die das modulierte Navigationssignal (7) auf der Trägerwelle liefert,
   - eine Emitterschaltung (15), die wenigstens eine Leistungsverstärkungsstufe umfasst, zum Emittieren eines Funkfrequenzsignals, das dem modulierten Navigationssignal entspricht,

**dadurch gekennzeichnet, dass** die Modulatorschaltung (13) die Aufgabe hat, auf der Trägerwelle vier pseudozufällige Navigationscodes C1, C2, C1', C2' zu modulieren, deren Frequenzen ein ganzzahliges Vielfaches von einem fc-Wert davon ist, gemäß einer konstanten 8-PSK Amplitudenmodulation mit einer Modulationsfrequenz fM wie:

$$8fc \leq fM$$

wobei fc = Max(fci) ist, wobei fci die Chipraten fc1, fc1', fc2, fc2' der Navigationscodes C1, C2, C1', C2' bedeutet, wobei jeder Wert fci so ist, dass fM = Ni.fci ist, wobei Ni eine ganze Zahl gleich oder größer als 8 ist, wobei zwei Navigationscodes C1, C1' auf der Frequenz f1 = fp - fM/8 quadraturmoduliert sind, und zwei weitere Navigationscodes C2, C2' auf der Frequenz f2 = fp + fM/8 quadraturmoduliert sind, wobei das modulierte Navigationssignal eine konstante Hüllkurve hat.

**13.** Vorrichtung nach Anspruch 12, **dadurch gekennzeichnet, dass** die Modulatorschaltung (13) die Aufgabe hat, eine 8-PSK Modulation mit einer Modulationsfrequenz von fM ≤ 400 MHz zu realisieren.

**14.** Vorrichtung nach Anspruch 12, **dadurch gekennzeichnet, dass** die Modulatorschaltung (13) die Aufgabe hat, eine 8-PSK Modulation mit einer Modulationsfrequenz fM ≤ 200 MHz zu realisieren.

**15.** Vorrichtung nach einem der Ansprüche 12 bis 14,
**dadurch gekennzeichnet, dass** die Modulatorschaltung (13) die Aufgabe hat, eine in der Fresnel-Ebene konstante symmetrische 8-PSK Amplitudenmodulation zu realisieren.

**16.** Vorrichtung nach einem der Ansprüche 12 bis 14, **dadurch gekennzeichnet, dass** die Modulatorschaltung (13) die Aufgabe hat, eine in der Fresnel-Ebene konstante asymmetrische 8-PSK Amplitudenmodulation zu realisieren.

**17.** Vorrichtung nach einem der Ansprüche 12 bis 16,
**dadurch gekennzeichnet, dass** die Modulatorschaltung (13) die Aufgabe hat, eine 8-PSK Phasenmodulation von gleich k.$\pi$/4 zu realisieren, wobei k eine ganze Zahl zwischen 1 und 8 ist.

**18.** Vorrichtung nach einem der Ansprüche 12 bis 17, **dadurch gekennzeichnet, dass** die Modulatorschaltung (13) die Aufgabe hat, die vier Codes gemäß einer Wahrheitstabelle zu modulieren, die aus der folgenden Gruppe von Wahrheitstabellen ausgewählt wird:

TABELLE 1

| C1(t) | -1 | -1 | -1 | -1 | -1 | -1 | -1 | .1 | 1 | 1 | 1 | 1 | 1 | 1 | 1 | 1 |
|---|---|---|---|---|---|---|---|---|---|---|---|---|---|---|---|---|

Tabelle fortgesetzt

| | | | | | | | | | | | | | | | | |
|---|---|---|---|---|---|---|---|---|---|---|---|---|---|---|---|---|
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | 1 | 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P5 | P4 | P4 | P3 | P6 | P7 | P5 | P2 | P6 | P1 | P3 | P2 | P7 | P8 | P8 | P1 |
| [TM, 2TM[ | P5 | P8 | P4 | P3 | P6 | P7 | P5 | P6 | P2 | P1 | P3 | P2 | P7 | P8 | P4 | P1 |
| [2TM, 3TM[ | P1 | P8 | P4 | P7 | P6 | P7 | P5 | P6 | P2 | P1 | P3 | P2 | P3 | P8 | P4 | P5 |
| [3TM, 4TM[ | P1 | P8 | P8 | P7 | P2 | P7 | P5 | P6 | P2 | P1 | P3 | P6 | P3 | P4 | P4 | P5 |
| [4TM, 5TM[ | P1 | P8 | P8 | P7 | P2 | P3 | P1 | P6 | P2 | P5 | P7 | P6 | P3 | P4 | P4 | P5 |
| [5TM, 6TM[ | P1 | P4 | P8 | P7 | P2 | P3 | P1 | P2 | P6 | P5 | P7 | P6 | P3 | P4 | P8 | P5 |
| [6TM, 7TM[ | P5 | P4 | P8 | P3 | P2 | P3 | P1 | P2 | P6 | P5 | P7 | P6 | P7 | P4 | P8 | P1 |
| [7TM, 8TM[ | P5 | P4 | P4 | P3 | P6 | P3 | P1 | P2 | P6 | P5 | P7 | P2 | P7 | P8 | P8 | P1 |

TABELLE 2

| | | | | | | | | | | | | | | | | |
|---|---|---|---|---|---|---|---|---|---|---|---|---|---|---|---|---|
| C1(t) | -1 | -1 | -1 | -1 | -1 | -1 | -1 | -1 | 1 | 1 | 1 | 1 | 1 | 1 | 1 | 1 |
| C2(t) | -1 | -1 | -1 | -1 | 1 | 1 | 1 | 1 | -1 | -1 | -1 | -1 | 1 | 1 | 1 | 1 |
| C1'(t) | -1 | -1 | 1 | 1 | -1 | -1 | 1 | 1 | -1 | -1 | 1 | 1 | -1 | -1 | 1 | 1 |
| C2'(t) | -1 | 1 | -1 | 1 | -1 | 1 | -1 | 1 | -1 | 1 | -1 | 1 | -1 | 1 | -1 | 1 |
| t modulo 8TM | | | | | | | | | | | | | | | | |
| [0, TM[ | P1 | P8 | P4 | P7 | P6 | P7 | P5 | P6 | P2 | P1 | P3 | P2 | P3 | P8 | P4 | P5 |
| [TM, 2TM[ | P1 | P8 | P8 | P7 | P2 | P7 | P5 | P6 | P2 | P1 | P3 | P6 | P3 | P4 | P4 | P5 |
| [2TM, 3TM[ | P1 | P8 | P8 | P7 | P2 | P3 | P1 | P6 | P2 | P5 | P7 | P6 | P3 | P4 | P4 | P5 |
| [3TM, 4TM[ | P1 | P4 | P8 | P7 | P2 | P3 | P1 | P2 | P6 | P5 | P7 | P6 | P3 | P4 | P8 | P5 |
| [4TM, 5TM[ | P5 | P4 | P8 | P3 | P2 | P3 | P1 | P2 | P6 | P5 | P7 | P6 | P7 | P4 | P8 | P1 |
| [5TM, 6TM[ | P5 | P4 | P4 | P3 | P6 | P3 | P1 | P2 | P6 | P5 | P7 | P2 | P7 | P8 | P8 | P1 |
| [6TM, 7TM[ | P5 | P4 | P4 | P3 | P6 | P7 | P5 | P2 | P6 | P1 | P3 | P2 | P7 | P8 | P8 | P1 |

Tabelle fortgesetzt

| [7TM, 8TM[ | P5 | P8 | P4 | P3 | P6 | P7 | P5 | P6 | P2 | P1 | P3 | P2 | P7 | P8 | P4 | P1 |
|---|---|---|---|---|---|---|---|---|---|---|---|---|---|---|---|---|

wobei P1, P2, P3, P4, P5, P6, P7, P8 die unterschiedlichen Plots und die Konstellation 8-PSK sind und TM = 1/fM ist, und gemäß weiteren Wahrheitstabellen, die durch Phasenrotation von n.π/4 aus diesen Wahrheitstabellen TABELLE 1 und TABELLE 2 hervorgehen, wobei n ∈ {1,2,3,4,5,6,7} und/oder eine Verlaufsrichtungsumkehr der Konstellation ist.

19. Vorrichtung nach einem der Ansprüche 12 bis 17, **dadurch gekennzeichnet, dass** fp zwischen 1000 MHz und 1700 MHz liegt.

20. Vorrichtung nach einem der Ansprüche 12 bis 19, **dadurch gekennzeichnet, dass** fc bei etwa 10 MHz liegt.

21. Vorrichtung nach einem der Ansprüche 12 bis 20, **dadurch gekennzeichnet, dass** fM bei etwa 120 MHz liegt.

22. Vorrichtung nach einem der Ansprüche 12 bis 21, **dadurch gekennzeichnet, dass** sie so gestaltet ist, dass in wenigstens einem Codepaar, das auf derselben Frequenz quadraturmoduliert ist, ein C1', C2' modulierte digitale Daten gemäß einer Frequenz von weniger als fc/1000 beinhaltet.

Fig. 1

EP 1 570 287 B1

Fig. 2

Fig. 3

EP 1 570 287 B1

Fig. 4

## Fig. 5

$B{\geq}2f_M/8{+}2f_c$

$fp \rightarrow fi$

CAN

7

18

50

49

48

47

46

Fig. 6

# Fig 7

# Fig 8

# Fig 9

## Fig 10

## Fig 11

# Fig 12